(19) **Europäisches Patentamt / European Patent Office / Office européen des brevets**

(11) **EP 4 316 657 A1**

(12) **EUROPEAN PATENT APPLICATION**
published in accordance with Art. 153(4) EPC

(43) Date of publication:
**07.02.2024 Bulletin 2024/06**

(21) Application number: **22781193.2**

(22) Date of filing: **30.03.2022**

(51) International Patent Classification (IPC):
**B01J 29/035** $^{(2006.01)}$   **B01J 37/08** $^{(2006.01)}$
**B01J 37/10** $^{(2006.01)}$   **C01B 3/40** $^{(2006.01)}$

(52) Cooperative Patent Classification (CPC):
**B01J 29/035; B01J 37/08; B01J 37/10; C01B 3/40;**
**Y02P 20/52**

(86) International application number:
**PCT/JP2022/016311**

(87) International publication number:
**WO 2022/210983 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021062273**

(71) Applicants:
• **FURUKAWA ELECTRIC CO., LTD.**
  **Tokyo 100-8322 (JP)**
• **NATIONAL UNIVERSITY CORPORATION HOKKAIDO UNIVERSITY**
  **Kita-ku**
  **Sapporo-shi**
  **Hokkaido 060-0808 (JP)**

(72) Inventors:
• **BANBA Yuichiro**
  **Tokyo 100-8322 (JP)**

• **FUKUSHIMA Masayuki**
  **Tokyo 100-8322 (JP)**
• **KAWAMATA Yuki**
  **Tokyo 100-8322 (JP)**
• **IWANO Yuki**
  **Tokyo 100-8322 (JP)**
• **MORI Tomohiko**
  **Tokyo 100-8322 (JP)**
• **FUJIKAWA Takashi**
  **Tokyo 100-8322 (JP)**
• **MASUDA Takao**
  **Sapporo-shi, Hokkaido 060-0808 (JP)**
• **NAKASAKA Yuta**
  **Sapporo-shi, Hokkaido 060-0808 (JP)**
• **YOSHIKAWA Takuya**
  **Sapporo-shi, Hokkaido 060-0808 (JP)**

(74) Representative: **Winter, Brandl - Partnerschaft mbB**
  **Alois-Steinecker-Straße 22**
  **85354 Freising (DE)**

(54) **CATALYST STRUCTURE FOR SYNTHESIS GAS PRODUCTION, SYNTHESIS GAS PRODUCTION DEVICE, AND METHOD FOR PRODUCING CATALYST STRUCTURE FOR SYNTHESIS GAS PRODUCTION**

(57) The present invention provides a catalyst structure for synthesis gas production, a synthesis gas production device, and a method for producing a catalyst structure for synthesis gas production, which allow the efficient production of a synthesis gas that can maintain excellent catalyst activity over a long period and that includes carbon monoxide and hydrogen. A catalyst structure 1 for synthesis gas production is used to produce a synthesis gas that includes carbon monoxide and hydrogen, the structure including: a carrier 10 with a porous structure that comprises a zeolite-type compound; first catalyst particles 20 that contain at least one iron-group element selected from the group consisting of nickel, iron, and cobalt; and a second catalyst 30 that contains at least one transition metal element with redox capacity. The carrier 10 includes, inside thereof, mutually communicating passages 11; the first catalyst particles 20 are present at least in the passages 11 of the carrier 10; and the second catalyst 30 is present at least in the interior or on an outer surface of the carrier 10.

EP 4 316 657 A1

# FIG. 1A

# FIG. 1B

**Description**

TECHNICAL FIELD

The present invention relates to a catalyst structure for synthesis gas production, a synthesis gas production device, and a method for producing a catalyst structure for synthesis gas production. More specifically, the present invention relates to: a catalyst structure for producing synthesis gas having a long-term stability, the catalyst structure being used when producing synthesis gas including carbon monoxide and hydrogen by contacting a methane-containing gas and carbon dioxide; a synthesis gas production device including such a catalyst structure for synthesis gas production; and a method for producing such a catalyst structure for synthesis gas production.

BACKGROUND ART

In recent years, a technology for converting carbon dioxide and methane, which are causes of global warming, into a synthesis gas including carbon monoxide and hydrogen (dry reforming) by contacting them has attracted attention as a countermeasure against global warming.

As a catalyst used in producing such synthesis gas, for example, Patent Document 1 discloses a catalyst structure for synthesis gas production including a carrier including a zeolite-type compound and having a porous structure and at least one catalytic material present inside the carrier, in which the carrier has channels communicating with one another, the ratio (Lid ratio) of the long side dimension L to the thickness dimension d of the carrier is 5.0 or more, and the catalytic material is present in at least the channels of the carrier.

However, since dry reforming requires increasing the carbon content in the raw material gas, coking tends to cause problems such as a decrease in catalytic activity and clogging of catalyst-filled reaction tubes. In this regard, in the catalyst structure of Patent Document 1, even when fine particles containing an iron-group element such as nickel (Ni), which has high catalytic activity but is likely to cause deposition (coking) of carbon on the catalyst surface, is used as the catalyst material, it is possible to suppress coking and maintain catalytic activity for a long period of time.

PRIOR ART DOCUMENTS

Patent Documents

Patent Document 1: PCT International Publication No. WO2020/116473

DISCLOSURE OF THE INVENTION

Problems to be Solved by the Invention

Accompanied by the maintenance of catalytic activity over a long period of time realized by suppressing coking with the catalyst structure of Patent Document 1, a new mode of deterioration of the catalyst has been found, which is caused by oxidation of fine particles containing iron-group elements such as nickel (Ni). This new mode of deterioration gradually decreases the catalytic activity, and exhibited a tendency different from that of a rapid decrease in catalytic activity in coking.

In this regard, the inventors previously found that a catalyst structure in which catalyst particles containing an iron-group element are present at least in the channels of the carrier, and catalyst particles containing at least one platinum-group element selected from the group consisting of platinum (Pt), palladium (Pd), rhodium (Rh) and ruthenium (Ru) are present at least either inside or on the outer surface of the carrier can suppress oxidation of catalyst particles containing iron-group elements due to water ($H_2O$) molecules produced as a by-product in a reverse shift reaction, which is a side reaction, and thus, the catalytic activity of the catalyst structure can be maintained for a longer period of time (Japanese Patent Application No. 2020-095652).

On the other hand, in this catalyst structure, in addition to catalyst particles containing an iron-group element, catalyst particles containing a platinum-group element are used. It is desirable that the catalytic activity of the catalyst structure can be maintained for a longer period of time.

It is an object of the present invention to provide a catalyst structure that can maintain high catalytic activity for a long period of time and is useful for efficient production of a synthesis gas including carbon monoxide and hydrogen, to provide a synthesis gas production device, and to provide a method for producing such a catalyst structure for synthesis gas production.

Means for Solving the Problems

As a result of intensive studies for achieving the object, the inventors have found that with a catalyst structure in which a carrier including a zeolite-type compound and having a porous structure has channels communicating with one another, first catalyst particles containing an iron-group element are present at least in the channels of the carrier, and second catalysts containing a transition metal element with Redox capacity are present at least either inside or on the outer surface of the carrier, when the catalyst structure is used for dry reforming to produce carbon monoxide and hydrogen from carbon dioxide and methane, coking on the surfaces of the first catalyst particles can be suppressed, and oxidation of the first catalyst particles present inside the carrier can be suppressed by the second catalysts containing a transition metal element with Redox capacity. Thus, the inventors have found that the catalyst structure having such features can maintain high catalytic activity for a long period of time and enables efficient production of synthesis gas including carbon monoxide and hydrogen, and have completed the present invention based on the findings.

Specifically, the present invention has the following principal aspects.

(1) A catalyst structure for synthesis gas production for use in production of a synthesis gas including carbon monoxide and hydrogen, the catalyst structure for synthesis gas production including: a carrier including a zeolite-type compound and having a porous structure; first catalyst particles including at least one iron-group element selected from the group consisting of nickel, iron, and cobalt; and second catalysts including at least one specific transition metal element selected from transition metal elements with Redox capacity, the carrier having, in its interior, channels communicating with one another, the first catalyst particles being present at least in the channels of the carrier, the second catalysts being present at least either inside the carrier or on an outer surface of the carrier.

(2) The catalyst structure for synthesis gas production according to aspect (1), in which the second catalysts contain, as the specific transition metal element, at least one of zirconium, vanadium, chromium, manganese, cobalt, copper, zinc, molybdenum, and titanium.

(3) The catalyst structure for synthesis gas production according to aspect (1) or (2), in which the second catalysts contain zirconium as the specific transition metal element.

(4) The catalyst structure for synthesis gas production according to any one of aspects (1) to (3), wherein the first catalyst particles are nickel particles.

(5) The catalyst structure for synthesis gas production according to any one of aspects (1) to (4), in which the catalyst structure further comprises third catalysts containing a platinum-group element selected from the group consisting of platinum, palladium, rhodium and ruthenium.

(6) The catalyst structure for synthesis gas production according to any one of aspects (1) to (5), in which a total content of the first catalyst particles contained in the catalyst structure for synthesis gas production is 0.50% by mass or more and 3.50% by mass or less in a quantitative value based on ICP emission spectroscopy (high-frequency inductively coupled plasma emission spectroscopy).

(7) The catalyst structure for synthesis gas production according to any one of aspects (1) to (6), in which an average particle size of the first catalyst particles is larger than an average inner diameter of the channels.

(8) The catalyst structure for synthesis gas production according to any one of aspects (1) to (7), in which an average particle size of the first catalyst particles is in a range of 1.0 nm or more and 13.0 nm or less.

(9) The catalyst structure for synthesis gas production according to any one of aspects (1) to (8), in which a ratio of an average particle size of the first catalyst particles to an average inner diameter of the channels is in a range of more than 1 and 130 or less.

(10) The catalyst structure for synthesis gas production according to any one of aspects (1) to (9), in which a total content of the second catalysts contained the catalyst structure for synthesis gas production is 0.85% by mass or more and less than 12.00% by mass in a quantitative value based on ICP emission spectroscopy (high-frequency inductively coupled plasma emission spectroscopy).

(11) The catalyst structure for synthesis gas production according to any one of aspects (1) to (10), in which the channels have: any one selected from a one-dimensional pore, a two-dimensional pore, and a three-dimensional pore of a framework structure of the zeolite-type compound; and enlarged pore portions different from all of the one-, two-, and three-dimensional pores, and among the first catalyst particles and the second catalysts, at least the first catalyst particles are present in the enlarged pore portions.

(12) The catalyst structure for synthesis gas production according to aspect (11), in which the enlarged pore portions connect a plurality of pores constituting one selected from the one-, two-, and three-dimensional pores.

(13) The catalyst structure for synthesis gas production according to aspects (11) or (12), in which the first catalyst particles present inside the carrier have an average particle size smaller than or equal to the inner diameters of the enlarged pore portions.

(14) The catalyst structure for synthesis gas production according to any one of aspects (1) to (13), in which both of the first catalyst particles and the second catalysts are fine metal particles or fine metal oxide particles.

(15) The catalyst structure for synthesis gas production according to any one of aspects (1) to (14), in which the zeolite-type compound is a silicate compound.

(16) The catalyst structure for synthesis gas production according to any one of aspects (1) to (15), in which the catalyst structure for synthesis gas production is capable of exhibiting a $CH_4$ conversion rate of 50% or more when loaded in an atmospheric pressure flow reactor, supplied with a raw material gas with a $CH_4/CO_2$ volume ratio of 1.0, and used to perform a dry reforming reaction at 700°C and a gas hourly space velocity (GHSV) of 2000 $h^{-1}$ for 1 hour from start of supply of the raw material gas.

(17) A precursor of the catalyst structure for synthesis gas production according to any one of aspects (1) to (16), in which a precursor material of at least the first catalyst particles among the first catalyst particles and the second catalysts is fine metal oxide particles.

(18) A synthesis gas production device including: the catalyst structure for synthesis gas production according to any one of aspects (1) to (16) or the precursor of the catalyst structure for synthesis gas production according to (17).

(19) A method of producing a catalyst structure for synthesis gas production, the method including: a first firing step that comprises firing a precursor material (B) including an iron-group element-containing solution and a precursor material (A) for obtaining a carrier having a porous structure and including a zeolite-type compound, the precursor material (A) having pores with a size of 13.0 nm or less and being impregnated with the iron-group element-containing solution; a hydrothermal treatment step that comprises hydrothermally treating a precursor material (C) obtained by firing the precursor material (B); a step that comprises impregnating, with a specific transition metal element-containing solution, a precursor material (D) obtained by hydrothermally treating the precursor material (C); and a second firing step that comprises firing the precursor material (D) impregnated with the specific transition metal element-containing solution, wherein the iron-group element is at least one selected from the group consisting of nickel, iron, and cobalt, and the specific transition metal element is selected from transition metal elements with Redox capacity.

(20) A method of producing a catalyst structure for synthesis gas production, the method including: a first firing step that comprises firing a precursor material (B) including a metal-containing solution and a precursor material (A), the metal-containing solution containing an iron-group element and a specific transition metal element, the precursor material (A) being for obtaining a carrier having a porous structure and including a zeolite-type compound, the precursor material (A) having pores with a size of 13.0 nm or less and being impregnated with the metal-containing solution; and a hydrothermal treatment step that comprises hydrothermally treating a precursor material (C) obtained by firing the precursor material (B), wherein the iron-group element is at least one selected from the group consisting of nickel, iron, and cobalt, and the specific transition metal element is selected from transition metal elements with Redox capacity.

Effects of the Invention

The present invention provides: a catalyst structure for synthesis gas production that can maintain high catalytic activity for a long period of time and is useful for efficient production of a synthesis gas including carbon monoxide and hydrogen; a synthesis gas production device; and a method for producing such a catalyst structure for synthesis gas production.

In particular, present invention provides: a catalyst structure for synthesis gas production capable of suppressing the collapse of the crystal structure and the decrease in the pore volume, of the zeolite constituting the carrier; a synthesis gas production device; and a method for producing such a catalyst structure for synthesis gas production.

BRIEF DESCRIPTION OF THE DRAWINGS

FIGS. 1A and 1B are schematic views of the inner structure of a catalyst structure according to an embodiment of the present invention, in which FIG. 1A is a perspective view (partially cross-sectional), and FIG. 1B is a partially enlarged cross-sectional view;

FIGS. 2A and 2B are partially enlarged cross-sectional views for showing an example of the function of the catalyst structure of FIGS. 1A and 1B, in which FIG. 2A is a view for showing a sieving function, and FIG. 2B is a view for showing a catalytic ability;

FIGS. 3A and 3B are schematic views of the inner structure of a catalyst structure according to a first modification of an embodiment of the present invention, in which FIG. 3A is a perspective view (partially cross-sectional), and FIG. 3B is a partially enlarged cross-sectional view;

FIGS. 4A and 4B are schematic views of the inner structure of a catalyst structure according to a second modification of an embodiment of the present invention, in which FIG. 4A is a perspective view (partially cross-sectional), and FIG. 4B is a partially enlarged cross-sectional view;

FIG. 5 is a flowchart showing an example of a method of producing the catalyst structure of FIGS. 1A and 1B;

FIG. 6 is a flowchart showing a modification of the method of producing the catalyst structure of FIGS. 1A and 1B;

FIG. 7 shows scanning electron microscope (SEM) photographs of the surfaces of the catalyst structures of Present Invention Examples 1 and 2 at magnifications of 1,000X and 50,000X;

FIG. 8 shows scanning electron microscope (SEM) photographs of the surfaces of the catalyst structures of Present Invention Examples 3 to 5 at magnifications of 1,000X and 50,000X;

FIG. 9 is a graph showing the relationship of quantitative values based on ICP emission spectroscopy (inductively coupled plasma emission spectroscopy), of zirconium (Zr), which is a transition metal element with Redox capacity, and the $CH_4$ conversion rate [%] at the initial reaction time, for the catalyst structures of Present Invention Examples, in which the horizontal axis is the quantitative value of zirconium (Zr) and the vertical axis is the $CH_4$ conversion rate;

FIG. 10 is a graph showing the relationship between the time (reaction time (days)) from the start of the catalytic reaction and the $CH_4$ conversion rate [%] for the catalyst structures of Present Invention Examples 1 to 3 and 6 and Comparative Examples 1 to 3, in which the horizontal axis is the reaction time and the vertical axis is the $CH_4$ conversion rate; and

FIGS. 11A and 11B show the results of $H_2$-TPR measurement for the catalyst structures of Present Invention Example 2 and Comparative Example 1, in which FIG. 11A shows the measurement results for the catalyst structure of Present Invention Example 2 before and after catalyst life evaluation, and FIG. 11B is a diagram showing measurement results for the catalyst structure of Comparative Example 1 before and after catalyst life evaluation.

PREFERRED MODE FOR CARRYING OUT THE INVENTION

Hereinafter, embodiments of the present invention will be described in detail with reference to the drawings.

Features of Catalyst Structure

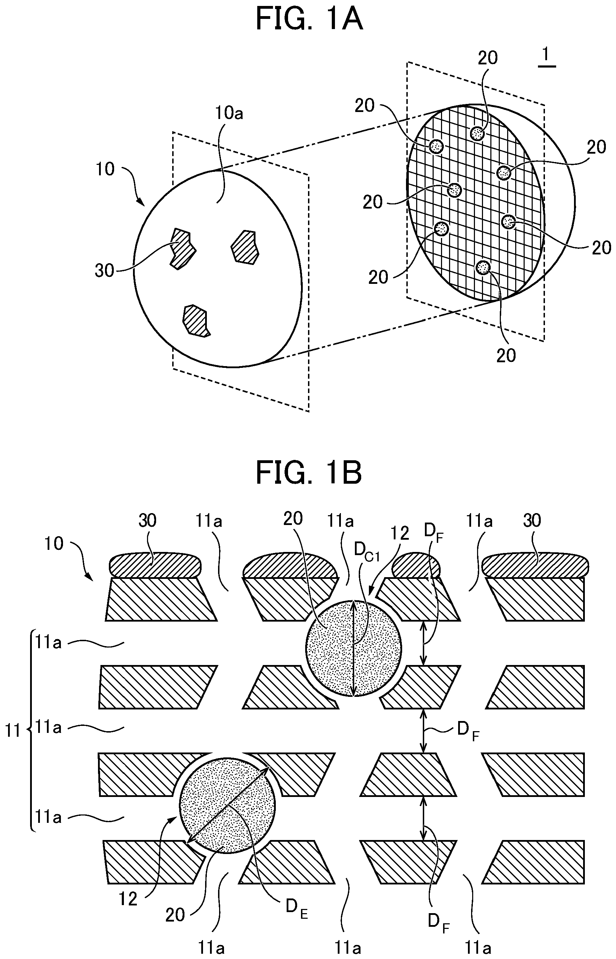

FIGS. 1A and 1B schematically show the features of a catalyst structure for synthesis gas production according to an embodiment of the present invention (hereinafter simply referred to as "the catalyst structure"), in which FIG. 1A is a perspective view (partially cross-sectional), and FIG. 1B is a partially enlarged cross-sectional view. It should be noted that FIGS. 1A and 1B show only an example of the catalyst structure and the features shown in FIGS. 1A and 1B, such as shapes and dimensions, are not intended to limit those of the present invention.

As shown in FIG. 1A, a catalyst structure 1, which is a catalyst structure for synthesis gas production for use in production of a synthesis gas including carbon monoxide and hydrogen, includes: a carrier 10 including a zeolite-type compound and having a porous structure; first catalyst particles 20 including an iron-group element as described later; and second catalysts 30 including at least one specific transition metal element selected from transition metal elements with Redox capacity.

The inventors have previously developed a catalyst structure including a carrier, such as zeolite, and a metal catalyst present inside the carrier, and found that when used for dry reforming reaction, such a catalyst structure exhibits high coking resistance and maintains high catalytic activity for a long period of time.

In addition, the present inventors have previously found that the main cause of such a decrease in catalytic activity, other than coking, is that water ($H_2O$) molecules form as a by-product of a reverse shift reaction, which is a side reaction, and oxidize the metal catalyst. Moreover, the present inventors have previously found that by using the catalyst particles containing an iron-group element present inside the carrier and the catalyst particles containing a platinum-group element such as platinum (Pt) in combination, the oxidation of the metal catalyst can be suppressed, and the catalytic activity can be maintained for a longer period of time.

However, in this catalyst structure, although the catalyst particles containing a platinum-group element were used in addition to the catalyst particles containing an iron-group element, it was necessary to maintain the catalytic activity of the catalyst structure for a longer period of time.

Now, the present inventors have found that a material containing a transition metal element with Redox capacity can decompose water ($H_2O$) produced as a by-product by the reverse shift reaction, which is a side reaction of the dry reforming reaction.

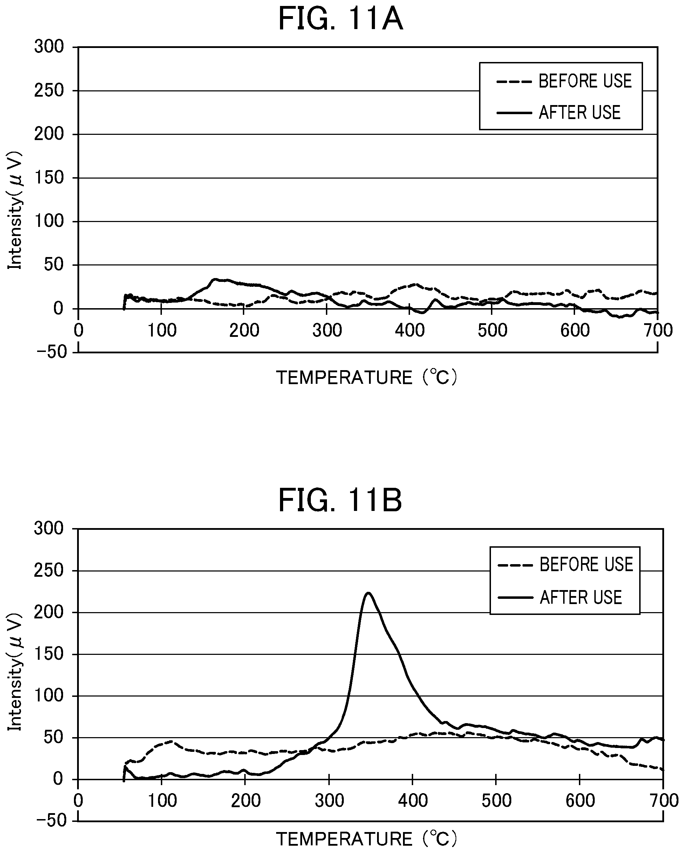

In this regard, the catalyst structure 1 of the present invention can suppress the oxidation of the first catalyst particles 20 by using the first catalyst particles 20 containing an iron-group element present inside the carrier and the second catalysts 30 containing a transition metal element with Redox capacity in combination. In this regard, FIG. 11A is a diagram showing the results of $H_2$-TPR measurement before and after the catalyst life evaluation for the catalyst structure carrying the second catalysts containing the transition metal element with Redox capacity of Present Invention Example, and FIG. 11B is a diagram showing the results of $H_2$-TPR measurement before and after the catalyst life evaluation for the catalyst structure not carrying second catalysts of Comparative Example. Details thereof will be described later, but in the catalyst structure carrying the second catalysts of Present Invention Example, as shown in FIG. 11A, no clear peak change was observed before and after the catalyst life evaluation. On the other hand, in the catalyst structure not carrying the second catalysts of Comparative Example, as shown in FIG. 11B, a peak that was not observed before catalyst life evaluation was observed near 300°C to 400°C in the sample after catalyst life evaluation. This peak is due to the reduction of NiO, and it is considered that nickel (Ni), which is the first catalyst particles, was oxidized after the catalyst life evaluation. Therefore, it is considered that oxidation of the first catalyst particles can be suppressed since the catalyst structure 1 of the present invention carries the second catalysts containing a transition metal element with Redox capacity. Here, one of the reasons why the oxidation of the first catalyst particles 20 can be suppressed is that the water ($H_2O$) generated in the side reaction of the dry reforming reaction is decomposed by the second catalysts.

In particular, zirconium (Zr), which is a transition metal element with Redox capacity, can suppress a decrease in catalytic activity due to the collapse of the crystal structure and the decrease in the pore volume, of the zeolite that constitutes the carrier after the dry reforming reaction as compared to the platinum-group element such as platinum (Pt) .

Therefore, the catalyst structure 1 of the present invention allows the first catalyst particles 20 to maintain their catalytic activity for a long period of time.

The catalyst structure 1 has multiple first catalyst particles 20 located at least in channels of the carrier 10, which communicate with one another. The catalyst structure 1 also has multiple second catalysts 30 located at least either inside the carrier 10 or on the outer surface of the carrier 10. The first catalyst particle 20, which is in the form of a fine particle, is a catalytic material that exhibits catalytic ability (catalytic activity) at least when the catalyst structure 1 is used as a catalyst. The action of the first catalyst particles 20 and the second catalysts 30 will be described in detail later.


<<Carrier>>

The carrier 10 includes a zeolite-type compound and has a porous structure. As used herein, the term "zeolite-type compound" is intended to include not only crystalline aluminosilicates but also zeolite analogs including phosphate-type porous crystals or other porous crystals having a structure similar to that of crystalline aluminosilicates, as shown in Toyota Central R&D Labs R&D Review, Vol. 29, No. 2, (1994.6) .

Examples of the zeolite-type compound include silicate compounds, such as zeolite (aluminosilicates), cation-exchanged zeolite, and silicalite; zeolite analogs, such as aluminoborates, aluminoarsenates, and germanates; and phosphate-type zeolite analogs, such as molybdenum phosphate. Among them, the zeolite-type compound is preferably a silicate compound.

Examples of the framework structure of the zeolite-type compound includes, but are not limited to, the framework structures of zeolite compounds approved by the Structure Commission of the International Zeolite Association. In particular, the framework structure of the zeolite-type compound is preferably selected from the group consisting of MTW type, MFI type (ZSM-5), FER type (ferrierite), LTA type (A type), MOR type (mordenite), and LTL type (L type), among which MFI type is more preferred. The MFI-type zeolite is more preferably aluminum (Al)-free Silicalite-1 zeolite. The zeolite-type compound has multiple pores of which the size depends on its framework structure. For example, MFI-type zeolite has a maximum pore size of 0.636 nm (6.36Å) and an average pore size of 0.560 nm (5.60Å).

The carrier 10 has a porous structure. As shown in FIG. 1B, the carrier 10 has channels 11 communicating with one another, which are preferably formed by multiple pores 11a. The first catalyst particles 20 include at least an iron-group element described later. The first catalyst particles 20 are present at least in channels 11 of the carrier 10 and preferably held at least in channels 11 of the carrier 10. The second catalyst 30 contains at least a transition metal element with Redox capacity and is present at least either inside or on the outer surface of the carrier 10.

Such a feature restricts the movement of the first catalyst particles 20 in the carrier 10 and effectively prevents aggregation of first catalyst particles 20 and aggregation of the first catalyst particles 20 and the second catalysts 30. This is effective in preventing a decrease in the effective surface area of the first catalyst particles 20 when the first catalyst particles 20 are allowed to act as a catalyst for dry reforming reaction to produce carbon monoxide and hydrogen from carbon dioxide and methane. In addition, water ($H_2O$) generated in a side reaction of the dry reforming reaction is decomposed by the second catalyst 30, thereby suppressing oxidation of the first catalyst particles 20 by water. Thus, the catalyst structure 1 of the present invention allows the first catalyst particles 20 to maintain their catalytic activity for a long period of time. Therefore, the catalyst structure 1 has a long service life. Furthermore, the long service life of the catalyst structure 1 will reduce the frequency of replacement of the catalyst structure 1 and thus significantly reduce the amount of discarded used catalyst structures 1, which will save resources.

The channels 11 preferably have any one selected from a one-dimensional pore, a two-dimensional pore, and a three-dimensional pore, which are defined by the framework structure of the zeolite-type compound, and preferably have enlarged pore portions 12 different from all of the one-, two-, and three-dimensional pores. In this case, among the first catalyst particles 20 and the second catalysts 30, at least first catalyst particles 20 are each preferably present in the enlarged pore portion 12 and more preferably enclosed in the enlarged pore portion 12. According to this feature, the first catalyst particle 20 present in the enlarged pore portion 12 is further restricted from moving in the carrier 10, and separation of the first catalyst particle 20, aggregation of first catalyst particles 20, and aggregation of first catalyst particles 20 and second catalysts 30 are more effectively prevented.

In this embodiment, as shown in FIG. 1B, the first catalyst particle 20 is enclosed in the enlarged pore portion 12 of the carrier 10, and the second catalyst 30 is present on the outer surface of the carrier 10. As used herein, the term "enclosed" means that the first catalyst particle 20 (or the second catalyst 30) is included in the carrier 10 and is not in contact with outside the zeolite except through a regular channel, which is formed during the synthesis of the zeolite. In this regard, the catalyst particle present in the enlarged pore portion 12 (the first catalyst particle 20 in this embodiment) does not always have to be in direct contact with the carrier 10 and may be indirectly held by the carrier 10 with an additional material (for example, a surfactant) provided between the catalyst particle and the carrier 10.

As used herein, the term "one-dimensional pore" or "one-dimensional pores" refers to a tunnel-or cage-shaped pore constituting a one-dimensional channel or refers to multiple tunnel-or cage-shaped pores constituting multiple one-dimensional channels. The term "two-dimensional pore" refers to a channel having multiple one-dimensional channels connected two-dimensionally. The term "three-dimensional pore" refers to a channel having multiple one-dimensional channels connected three-dimensionally. Thus, the term "enlarged pore portion" is not intended to include a pore expanded to form a regular zeolite structure, such as a supercage.

FIG. 1B shows a case in which the first catalyst particle 20 is enclosed in the enlarged pore portion 12. Such a feature is non-limiting, and alternatively, the first catalyst particle 20 may be held in the channel 11 while partially protruding out of the enlarged pore portion 12. Alternatively, the first catalyst particle 20 may be partially embedded in a portion of the channel 11 other than the enlarged pore portion 12 (for example, an inner wall portion of the channel 11) or may be held by fixation or the like.

The enlarged pore portion 12 also preferably connects multiple pores 11a to one another when the pores 11a form any of the one-, two-, and three-dimensional pores. According to this feature, another channel different from the one-, two-, or three-dimensional pore is provided in the carrier 10 to allow the first catalyst particles 20 and the second catalysts 30 to function more effectively.

The channel 11 preferably has a three-dimensional structure including a branching or junction portion inside the carrier 10, and the enlarged pore portion 12 is preferably provided at the branching or junction portion of the channel 11.

The average inner diameter $D_F$ of the channels 11 provided in the carrier 10 may be calculated from the average of the short and long diameters of the pores 11a, which form any of the one-, two-, and three-dimensional pores. The average inner diameter $D_F$ of the channels 11 is, for example, 0.1 nm to 1.5 nm and preferably 0.5 nm to 0.8 nm. The inner diameter $D_E$ of the enlarged pore portion 12 is, for example, 0.5 nm to 50 nm, preferably 1.1 nm to 40 nm, and more preferably 1.1 nm to 3.3 nm. The inner diameter $D_E$ of the enlarged pore portion 12 depends, for example, on the pore size of the precursor material (A) described later and the size of the first catalyst particle 20 to be enclosed in the enlarged pore portion 12. The inner diameter $D_E$ of the enlarged pore portion 12 is such that it is possible to enclose the catalyst particle 20.

The carrier 10 may be in any shape. For example, the carrier 10 may be flat plate-shaped. The flat plate-shaped carrier 10 preferably has a long side of 1.00 um or more, more preferably 1.00 um or more and 50.00 $\mu$m or less, and even more preferably 1.00 um or more and 25.00 $\mu$m or less. The flat plate-shaped carrier 10 preferably has a thickness of 0.05 $\mu$m or more and 2.00 $\mu$m or less. The flat plate-shaped carrier 10 has a short side that is along the direction perpendicular to the directions of its long side and its thickness; and is smaller than its long side and larger than its thickness.

<<First Catalyst Particle>>

The first catalyst particle 20 includes at least one iron-group element selected from the group consisting of nickel (Ni), iron (Fe), and cobalt (Co). The first catalyst particle 20 alone is in the form of a fine particle. In particular, the iron-group element is preferably nickel (Ni) in order for the first catalyst particle 20 to have high catalytic properties.

The first catalyst particle 20 may be a fine metal particle including a single elementary metal, a mixture of two or more metal elements, or a mixture of two or more metal elements at least partially forming an alloy. In this regard, the fine metal particle preferably includes an unoxidized metal. Alternatively, before use, the first catalyst particle 20 may be a fine metal oxide particle including one or more metal oxides or a composite material of metal oxides. Before use, the fine metal oxide particle can be reduced into a fine metal particle for use as a catalyst by being subjected to the reduction step (step S7) described later or by being exposed to an operational environment including a reductive atmosphere for a certain period. When used herein to indicate the component (material) of the fine metal particle for use as a catalyst, the term "metal" is a generic term for a metallic material including one or more metal elements, which is intended to include an elementary metal including a single metal element and a metal mixture and alloy including two or more metal elements. The fine metal particle or the fine metal oxide particle may be in the form of a primary particle held in the channel 11 or may be in the form of a secondary particle including an aggregate of primary particles held in the channel 11.

The average particle size $D_{C1}$ of the first catalyst particles 20 is preferably larger than the average inner diameter $D_F$ of the channels 11 ($D_{C1} > D_F$). The average particle size $D_{C1}$ of the first catalyst particles 20 is preferably smaller than or equal to the inner diameter $D_E$ of the enlarged pore portion 12 ($D_{C1} \leq D_E$). The first catalyst particles 20 with an average particle size $D_C$ within the above range are restricted from moving in the carrier 10. Therefore, even in a case where an external force is applied from a fluid to the first catalyst particles 20, the movement of the first catalyst particles 20 is restricted in the carrier 10, so that the first catalyst particles 20 dispersed in the carrier 10 are effectively prevented from coming into contact with one another or with the second catalysts 30 and thus effectively prevented from forming aggregates.

The average particle size $D_{C1}$ of the first catalyst particles 20 is preferably in the range of 1.0 nm or more and 13.0 nm or less, more preferably in the range of 1.0 nm or more and 9.0 nm or less, and even more preferably in the range of 1.0 nm or more and 4.5 nm or less. Carbon polymerization is less likely to occur on the first catalyst particles 20 with an average particle size $D_{C1}$ within the above range, which means that the coking described later is less likely to occur thereon and that they have further improved catalytic activity.

The ratio ($D_{C1}/D_F$) of the average particle size $D_{C1}$ of the first catalyst particles 20 to the average inner diameter $D_F$ of the channels 11 is preferably in the range of more than 1 and 130 or less, more preferably in the range of 1.1 or more and 90 or less, even more preferably in the range of 1.1 or more and 45 or less, and furthermore preferably in the range of 1.4 or more and 6.3 or less.

The average particle size $D_{C1}$ of the first catalyst particles 20 may be determined by a method that includes subjecting a cross-section of the catalyst structure 1 to small angle X-ray scattering (SAXS) analysis and subjecting the resulting SAXS data to fitting by Guinier approximation using a spherical model. This method can also determine how the first catalyst particles 20 are dispersed in the catalyst structure 1. The SAXS measurement may be carried out, for example, using the beamline BL19B2 of SPring-8.

From the viewpoint of obtaining desired catalytic properties and making coking less likely to occur, the total content of the first catalyst particles 20 in the catalyst structure 1 is preferably in the range of 0.50% by mass to 3.50% by mass with respect to the catalyst structure 1 in a quantitative value based on ICP emission spectroscopy (high-frequency inductively coupled plasma emission spectroscopy). More preferably, the content is in the range of 0.50% by mass to 2.50% by mass. Even more preferably, the content is in the range of 0.50% by mass or more and 1.50% by mass or less. If the content of the first catalyst particles 20 is less than 0.50% by mass, there is a possibility that the catalytic activity will be low or insufficient for dry reforming. On the other hand, if the content of the first catalyst particles 20 is more than 3.50% by mass, the carrier 10 may carry too many first catalyst particles 20 and the strength of the carrier 10 tends to decrease. The content of the first catalyst particles 20 determined by ICP emission spectroscopy is calculated, for example, by the formula: {(the mass of the iron-group element)/(the mass of all elements in the catalyst structure 1)} $\times$ 100.

During dry reforming, the first catalyst particle 20 acts to accelerate the reaction to convert a raw material gas including carbon dioxide and methane to a gas including carbon monoxide and hydrogen.

In general, dry reforming, which uses a raw material with a high carbon content, is more likely to result in carbon deposition on the catalyst surface than steam reforming in which methane reacts with water vapor. Thus, dry reforming is more likely to suffer from coking-induced problems, such as a decrease in catalytic activity due to carbon deposition and carbon deposition-induced clogging of a reaction tube that contains the catalyst structure 1. In particular, among the iron-group elements: nickel (Ni), iron (Fe), and cobalt (Co), nickel (Ni) is naturally prone to coking since nickel (Ni), which is known for its high activity, catalyzes a larger amount of the raw material gas. Moreover, an increase in the activity of iron (Fe) or cobalt (Co) will increase the quantity of coking, although such quantity of coking is smaller than that on nickel (Ni) since iron (Fe) or cobalt (Co) has lower activity. Thus, the catalyst structure 1 including an iron-group element needs to be less prone to coking in exchange for having high activity. In this regard, the catalyst structure 1 of the present invention includes a combination of the first catalyst particle 20 including an iron-group element and the second catalyst 30 containing a transition metal element with Redox capacity so that it is highly active and less prone to coking.

Second Catalyst

The second catalysts 30 contain a specific transition metal element selected from transition metal elements with Redox (abbreviation of reduction oxidation reaction) capacity, and is present at least inside or on the outer surface of the carrier 10. The second catalyst 30 can suppress oxidation of the first catalyst particles 20 by decomposing water ($H_2O$) molecules by-produced by the reverse shift reaction, which is a side reaction of the dry reforming reaction. Thus, the catalytic activity of the first catalyst particles 20 can be maintained for a long period of time.

The second catalysts 30 contain at least one specific transition metal element with Redox capacity. Among them, the second catalysts 30 preferably contain at least one of zirconium (Zr), vanadium (V), chromium (Cr), manganese (Mn), cobalt (Co), copper (Cu), zinc (Zn), molybdenum (Mo), and titanium (Ti), and more preferably zirconium (Zr). The second catalysts 30 preferably contain a metal composed of these specific transition metal elements, alloys of at least some of them, and oxides of these specific transition metal elements.

The shape of the second catalysts 30 is not particularly limited, and may be, for example, a particulate shape or a film-like shape formed by aggregation of particles. In particular, when the second catalysts 30 are present on the outer surface of the carrier 10, the shape of the second catalysts 30 is preferably either a film-like shape or a particulate shape. On the other hand, when the second catalysts 30 are present inside the carrier 10, the shape of the second catalysts 30 is preferably a particulate shape. In particular, both the first catalyst particles 20 and the second catalysts 30 are preferably fine metal particles or fine metal oxide particles.

In a case where the second catalysts 30 are present inside the carrier, they preferably have an average particle size $D_{C2}$ larger than the average inner diameter $D_F$ of the channels 11 ($D_{C2} > D_F$). The average particle size $D_{C2}$ of the second catalysts 30 present inside the carrier is also preferably smaller than or equal to the inner diameter $D_E$ of the enlarged pore portion 12 ($D_{C2} \leq D_E$). The second catalysts 30 with an average particle size $D_{C2}$ within the above range are restricted from moving in the carrier 10. Therefore, even in a case where an external force is applied from a fluid to the second catalysts 30, the movement of the second catalysts 30 is restricted in the carrier 10, so that the second catalysts 30 dispersed in the carrier 10 are effectively prevented from coming into contact with one another or with the first catalyst particles 20 and thus effectively prevented from forming aggregates.

From the viewpoint of appropriately suppressing the oxidation of the first catalyst particles 20 and achieving a long life of the catalyst structure 1, the total content of the second catalysts 30 in the catalyst structure 1 is preferably 0.85% by mass or more with respect to the catalyst structure 1 in a quantitative value based on ICP emission spectroscopy (high-frequency inductively coupled plasma emission spectroscopy). On the other hand, if the content of the second catalysts 30 is too high, the catalytic activity at the initial stage of the dry reforming reaction will be lowered. It is considered that one of the causes of the decrease in the catalytic activity in the initial stage of the dry reforming reaction is partial collapse of the porous structure of the zeolite. Therefore, the total content of the second catalysts 30 in the catalyst structure 1 is preferably less than 12.00% by mass in a quantitative value based on ICP emission spectroscopy. Here, the content of the second catalysts 30 in the catalyst structure 1 obtained by ICP emission spectroscopy is calculated, for example, by the formula: {(mass of specific transition metal element contained in second catalysts 30)/(mass of all elements in catalyst structure 1)} $\times$ 100.

Note that the catalyst structure 1 may contain an additional element that is different from both the iron-group elements and the specific transition metal elements. The additional element includes at least one metal element selected from the group consisting of metals of Groups 1, 2 and 12 of the periodic table. Among them, it is preferable to contain, as the additional element, at least one metal element selected from the group consisting of potassium (K), magnesium (Mg), manganese (Mn) and zinc (Zn). By containing such an additional element, the generation of silicates of iron-group elements is suppressed, so that the decrease in catalytic activity can be further suppressed. On the other hand, from the viewpoint of suppressing a decrease in catalytic activity due to a relative decrease in iron-group elements, the content of an additional element is 5% by mass or less with respect to the catalyst structure 1 in a quantitative value based on ICP emission spectroscopy.

In addition, from the viewpoint of maintaining excellent catalytic activity over a longer period of time, the catalyst structure 1 preferably further contains a third catalyst (not shown), containing a platinum-group element selected from the group consisting of platinum (Pt), palladium (Pd), rhodium (Rh) and ruthenium (Ru). Here, the content of the platinum-group element constituting the third catalyst in the catalyst structure 1 is preferably 0.02% by mass or more, more preferably 0.10% by mass or more, even more preferably 0.40% by mass or more, with respect to the catalyst structure 1. On the other hand, the upper limit of the content of the platinum-group element constituting the third catalyst in the catalyst structure 1 is not particularly limited, but may be, for example, 6.00% by mass or 3.00% by mass. The third catalyst can be present on one or both of the inside and the outer surface of the carrier 10. In particular, the third catalyst is preferably present on the outer surface of the carrier 10.

On the other hand, since platinum-group elements selected from the group consisting of platinum (Pt), palladium (Pd), rhodium (Rh) and ruthenium (Ru) are expensive, the catalyst structure 1 preferably does not contain platinum-group elements as an additional element from the viewpoint of suppressing an increase in the material cost of the catalyst structure 1 using platinum-group elements.

[Function of Catalyst Structure]

As mentioned above, the catalyst structure 1 includes: the carrier 10 having a porous structure; the first catalyst particles 20 that are present inside the carrier 10 and include an iron-group element; and the second catalysts 30 that are present at least either inside the carrier 10 or on the outer surface of the carrier 10 and contain a transition metal element with Redox capacity.

Upon coming into contact with a fluid including methane and carbon dioxide, the first catalyst particles 20 present inside the carrier of the catalyst structure 1 exert their ability to catalyze the chemical reaction for dry reforming. Specifically, upon coming into contact with the outer surface 10a of the catalyst structure 1, the fluid is allowed to flow into the interior of the carrier 10 through a pore 11a at the outer surface 10a, guided into the channels 11, and allowed to pass through the channels 11 and to flow out of the catalyst structure 1 through another pore 11a. Upon coming into contact with the fluid passing through the channel 11, the first catalyst particle 20 present inside the channel 11 catalyzes the reaction. The catalyst structure 1 also has a molecular sieving ability since the carrier has a porous structure.

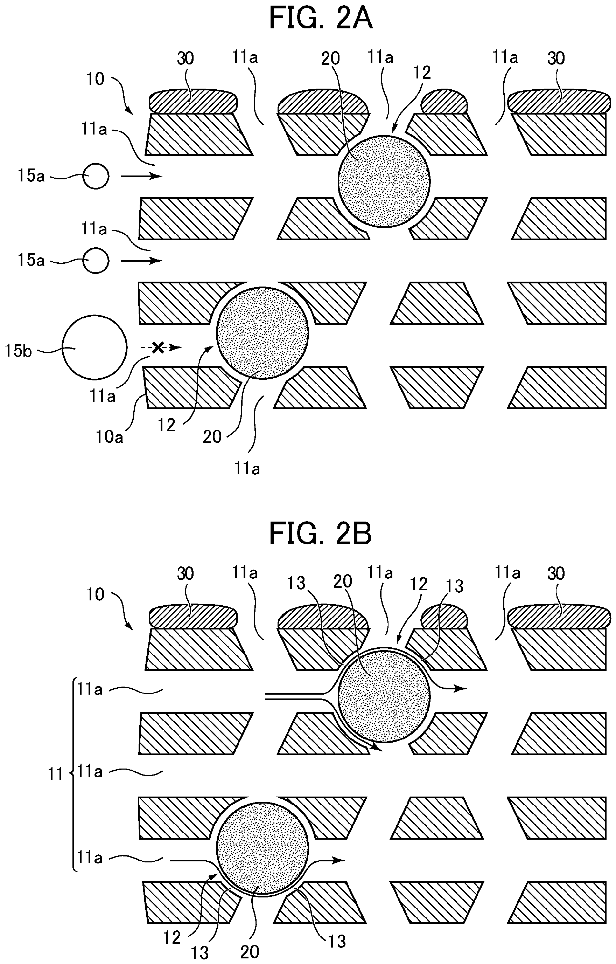

First, the molecular sieving ability of the catalyst structure 1 will be described with reference to FIG. 2A regarding an example in which a methane-containing gas and carbon dioxide are used as fluids. The term "methane-containing gas" refers to a gaseous mixture of methane and a gas other than methane. The methane-containing gas and carbon dioxide may be sequentially or simultaneously brought into contact with the catalytic structure 1.

As shown in FIG. 2A, molecules 15a having a size smaller than or equal to the diameter of the pore 11a, in other words, smaller than or equal to the inner diameter of the channel 11, can enter the carrier 10. On the other hand, a molecule 15b having a size exceeding the diameter of the pore 11a cannot enter the carrier 10. Accordingly, among multiple compounds in the fluid, some compounds not capable of entering the carrier 10 are restricted from reacting, and some other compounds capable of entering the carrier 10 are allowed to react.

Among compounds produced by reactions in the carrier 10, only compounds having a molecular size not exceeding the diameter of the pore 11a can go outside the carrier 10 through the pore 11a to give a reaction product. On the other hand, some compounds are not capable of going outside the carrier 10 through the pore 11a. If such compounds are converted into compounds having a molecular size that allows exit from the carrier 10, the compounds can go outside the carrier 10. As a result, the use of the catalyst structure 1 makes it possible to selectively obtain a specific reaction product.

In the catalyst structure 1, the first catalyst particle 20 is enclosed in the enlarged pore portion 12 of the channel 11 as shown in FIG. 2B. When the average particle size $D_{C1}$ of the first catalyst particles 20 is larger than the average inner diameter $D_F$ of the channel 11 and smaller than the inner diameter $D_E$ of the enlarged pore portion 12 ($D_F < D_{C1} < D_E$), a small channel 13 is provided between the first catalyst particle 20 and the enlarged pore portion 12. In this case, as indicated by the arrow in FIG. 2B, the fluid entering the small channel 13 comes into contact with the first catalyst particle 20. The first catalyst particle 20 enclosed in the enlarged pore portion 12 is restricted from moving in the carrier 10. This prevents aggregation of the first fine catalyst particles 20 in the carrier 10. As a result, a large contact area will be stably maintained between the first catalyst particle 20 and the fluid.

Further, the catalyst structure 1 allows the second catalysts 30, which are present at least either inside the carrier or on the outer surface of the carrier and contain a transition metal element with Redox capacity, to decompose water ($H_2O$) generated as a by-product due to the reverse shift reaction which is a side reaction of the dry reforming reaction. Thus, it is possible to prevent a decrease in catalytic activity due to oxidation of the first catalyst particles 20 including the iron-group element.

In this embodiment, the catalyst structure 1 may be used to produce a synthesis gas including carbon monoxide and hydrogen from a methane-containing gas and carbon dioxide as raw materials. The catalytic reaction (dry reforming reaction) may be carried out at a high temperature of, for example, 700°C or more, during which the first catalyst particles 20 are less susceptible to the heating since they are present inside the carrier 10.

In particular, the catalyst structure 1 of the present embodiment preferably has high initial catalytic properties. More specifically, the catalyst structure 1 preferably exhibits a $CH_4$ conversion rate (initial $CH_4$ conversion rate) of 50% or more, more preferably, 70% or more, when the catalyst structure for synthesis gas production is loaded in an atmospheric pressure flow reactor, supplied with a raw material gas with a $CH_4/CO_2$ volume ratio of 1.0, and used to perform a dry reforming reaction at 700°C and a gas hourly space velocity (GHSV) of 2,000h$^{-1}$ for 1 hour from the start of supply of the raw material gas. Accordingly, when used for the dry reforming reaction, the catalyst structure for synthesis gas production enhances the catalytic activity.

Further, it is preferable that the catalyst structure 1 of the present embodiment has a long catalyst life. More specifically, the catalyst structure 1 preferably maintain a high $CH_4$ conversion rate when the catalyst structure for synthesis gas production is loaded in an atmospheric pressure flow reactor, supplied with a raw material gas with a $CH_4/CO_2$ volume ratio of 1.0, and used to perform a dry reforming reaction at 700°C and a gas hourly space velocity (GHSV) of 2,000h$^{-1}$.

[First Modification of Catalyst Structure]

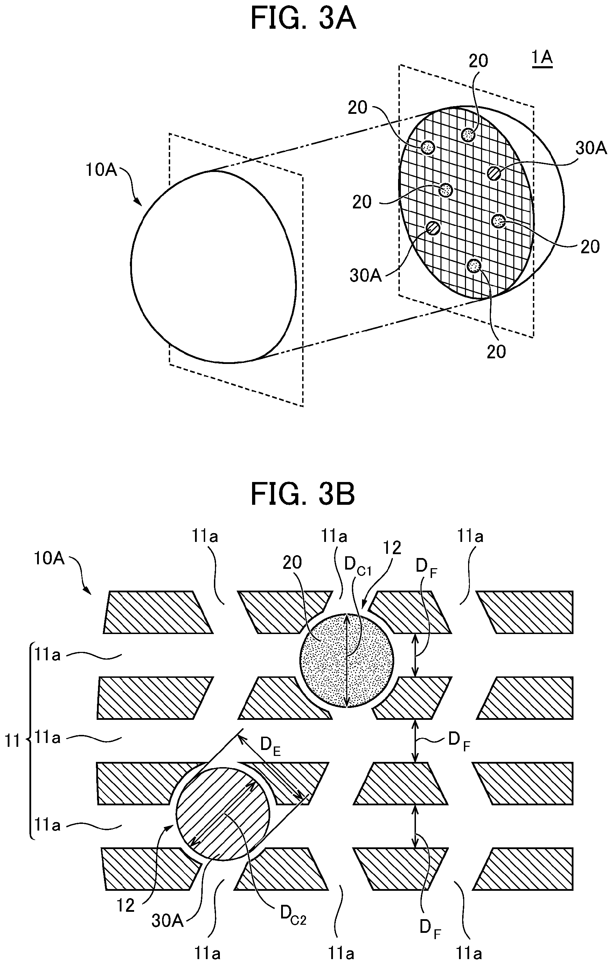

FIGS. 3A and 3B are schematic views of the inner structure of a catalyst structure according to a first modification of an embodiment of the present invention, in which FIG. 3A is a perspective view (partially cross-sectional), and FIG. 3B is a partially enlarged cross-sectional view. Hereinafter, some features of the catalyst structure, different from the features of the catalyst structure 1 of FIGS. 1A and 1B, will be mainly described while the same features will not be repeatedly described or will be briefly described using the same reference signs for the same elements in the drawings.

FIGS. 1A and 1B show the catalyst structure 1 having the second catalysts 30 present on the outer surface 10a of the carrier 10. This feature is non-limiting, and alternatively, FIGS. 3A and 3B show a catalyst structure 1A having second catalysts 30A present inside the carrier 10 and preferably having second catalysts 30A at least in channels 11 of the carrier 10. Namely, the catalytic structure 1A may have the first catalyst particles 20 and the second catalysts 30A both present in channels 11 of the carrier 10.

In particular, in a case where the channels 11 have any one selected from a one-dimensional pore, a two-dimensional pore, and a three-dimensional pore, which are defined by the framework structure of the zeolite-type compound, and have enlarged pore portions 12 different from all of the one-, two- , and three-dimensional pores, the first catalyst particles 20 and the second catalysts 30 are each preferably present in the enlarged pore portion 12 and more preferably enclosed in the enlarged pore portion 12.

This feature will restrict both the first catalyst particles 20 and the second catalysts 30A from moving in the carrier 10, effectively prevent aggregation of the first catalyst particles 20 and the second catalysts 30A, and effectively prevent separation of the first catalyst particles 20 and the second catalysts 30A from the carrier 10. This will effectively prevent a decrease in the effective surface area of the first catalyst particles 20 and the second catalysts 30A and allow the first catalyst particles 20 and the second catalysts 30A to maintain their catalytic activity for a long period of time. Accordingly, the catalyst structure 1A will be much less likely to suffer from aggregation of the catalyst fine particles 20 and thus much less prone to a decrease in catalytic activity and will have a longer service life.

In this case, the average particle size $D_{C1}$ of the first catalyst particles 20 and the average particle size $D_{C2}$ of the second catalysts 30, which are present inside the carrier 10, are each preferably larger than the average inner diameter $D_F$ of the channels 11 ($D_{C1} > D_F$ and $D_{C2} > D_F$). Moreover, the average particle size $D_{C1}$ of the first catalyst particles 20 and the average particle size $D_{C2}$ of the second catalysts 30, which are present inside the carrier 10, are each preferably smaller than or equal to the inner diameter $D_E$ of the enlarged pore portion 12 ($D_{C1} \le D_E$ and $D_{C2} \le D_E$). With the average particle sizes $D_{C1}$ and $D_{C2}$ falling within the above ranges, the first catalyst particles 20 and the second catalysts 30 present inside the carrier 10 are restricted from moving in the carrier 10. Accordingly, the first catalyst particles 20 and the second catalysts 30 dispersed in the carrier 10 are effectively prevented from aggregating, so that the catalyst structure 1A will have a longer service life.

In this case, the second catalyst 30 does not always have to be in direct contact with the carrier 10 and may be indirectly held by the carrier 10 with an additional material (for example, a surfactant) provided between the second catalyst 30 and the carrier 10.

[Second Modification of Catalyst Structure]

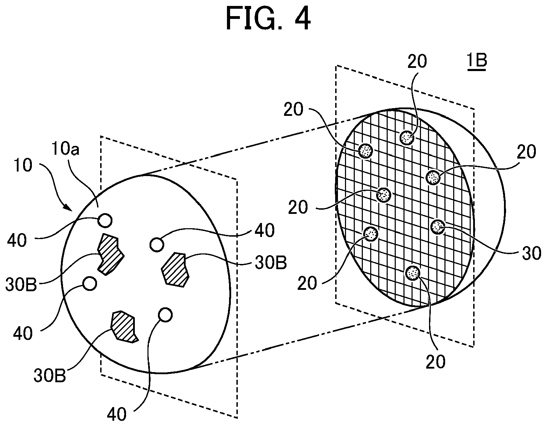

FIGS. 4A and 4B are schematic views of the inner structure of a catalyst structure according to a second modification of an embodiment of the present invention, in which FIG. 4A is a perspective view (partially cross-sectional), and FIG. 4B is a partially enlarged cross-sectional view. Hereinafter, some features of the catalyst structure, different from the features of the catalyst structure 1 of FIGS. 1A and 1B, will be mainly described while the same features will not be repeatedly described or will be briefly described using the same reference signs for the same elements in the drawings.

FIGS. 1A and 1B show the catalyst structure 1 having the first catalyst particles 20 and the second catalysts 30. This feature is non-limiting, and for example, as FIGS. 4A and 4B show, a catalyst structure 1B may include at least one type of additional catalyst particles 40 held on the outer surface 10a of the carrier 10 in addition to the first catalyst particles 20 and the second catalysts 30. The additional catalyst 40 may include at least one iron-group element selected from the group consisting of nickel (Ni), iron (Fe), and cobalt (Co). In the catalyst structure 1B of FIGS. 4A and 4B, the additional catalyst 40 has the ability to catalyze the chemical reaction for dry reforming and works together with the first catalyst particle 20 to further accelerate the dry reforming reaction.

In the catalyst structure 1B of FIGS. 4A and 4B, the additional catalyst 40 has the ability to catalyze the chemical reaction for dry reforming and works together with the first catalyst particle 20 to further accelerate the dry reforming reaction.

In this case, the total content of the first catalyst particles 20 and the second catalysts 30 in the carrier 10 is preferably higher than the content of the additional catalyst particles 40 on the outer surface 10a of the carrier 10. Accordingly, the catalytic ability of the first catalyst particles 20 held inside the carrier 10 and the catalytic ability of the second catalysts 30 in the carrier 10 will be dominant, and the first catalyst particles 20 and the second catalysts 30 will stably exhibit their catalytic ability.

The catalytic structure 1B preferably has second catalysts 30 present on the outer surface 10a of the carrier 10. Thus, the second catalysts 30 and the additional catalyst particles 40 are preferably present on the outer surface 10a of the carrier 10. Accordingly, the additional catalysts 40 on the outer surface 10a of the carrier 10 will function to decompose water ($H_2O$) molecules by-produced in the vicinity of the additional catalysts 40 held on the outer surface 10a of the carrier 10 during dry reforming, which means that the catalyst structure 1B will have a longer service life even in a case where the additional catalyst particles 40 are provided on the outer surface 10a of the carrier 10.

[Method of Producing Catalyst Structure]

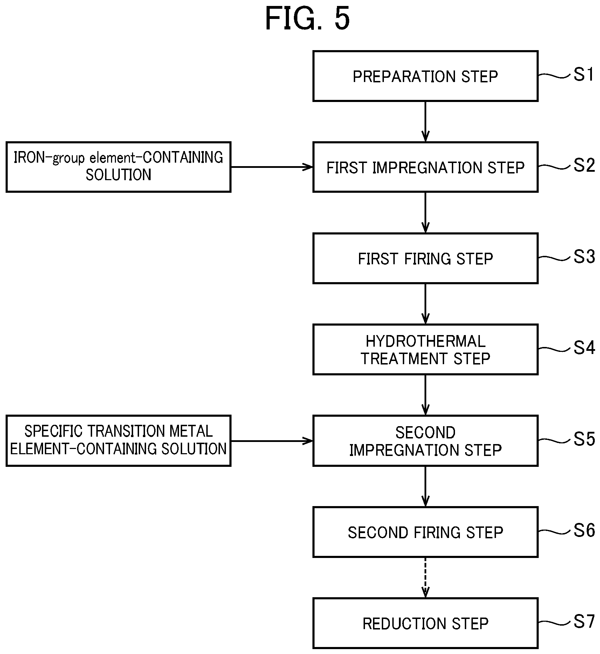

FIG. 5 is a flowchart showing an example of a method of producing the catalyst structure according to the present invention. Hereinafter, an example of a method of producing the catalyst structure will be described.

(Step S1: Preparation Step)

As shown in FIG. 5, first, a precursor material (A) having pores with sizes of at most 13.0 nm is prepared, which is for obtaining a carrier having a porous structure and comprising a zeolite-type compound. The precursor material (A) is preferably an ordered mesoporous material, and may be appropriately selected depending on the type (composition) of the zeolite-type compound for obtaining the carrier of the catalyst structure.

In a case where a silicate compound is used as the zeolite-type compound for obtaining the carrier of the catalyst structure, the ordered mesoporous material is preferably a compound having an Si-O framework with pores regularly developed in a one-, two-, or three-dimensional pattern and with uniform pore sizes of at most 13.0 nm, more preferably 1.0 nm or more and 13.0 nm or less. A variety of synthetic products can be obtained as such ordered mesoporous materials depending on the synthesis conditions. Examples of such synthetic products include SBA-1, SBA-15, SBA-16, KIT-6, FSM-16, and MCM-41, among which MCM-41 is preferred.

For reference, SBA-1 has a pore size of 10 nm to 30 nm, SBA-15 has a pore size of 6 nm to 10 nm, SBA-16 has a pore size of 6 nm, KIT-6 has a pore size of 9 nm, FSM-16 has a pore size of 3 nm to 5 nm, and MCM-41 has a pore size of 1 nm to 10 nm. Examples of such an ordered mesoporous material include mesoporous silica, mesoporous aluminosilicate, and mesoporous metallosilicate.

The precursor material (A) may be a commercially available product or a product synthesized in the step. The precursor material (A) may be synthesized using a known method for synthesizing an ordered mesoporous material. For example, a mixture solution is prepared, which contains a raw material containing the element for forming the precursor material (A) and a template agent for directing the structure of the precursor material (A). Optionally after being subjected to pH adjustment, the mixture solution is subjected to hydrothermal treatment (hydrothermal synthesis). Subsequently, the precipitate (product) resulting from the hydrothermal treatment is collected (for example, filtered off), optionally washed and dried, and then fired to give a precursor material (A) as a powdery ordered mesoporous material.

In this process, the solvent for the mixture solution may be, for example, water, an organic solvent such as an alcohol, or a mixed solvent thereof. The raw material may be selected depending on the type of the carrier. Examples of the raw material include silica agents, such as tetraethoxysilane (TEOS), fumed silica, and quartz sand. The template agent may be any of various surfactants and block copolymers. The template agent is preferably selected depending on the type of the ordered mesoporous material to be synthesized. For example, the template agent for use in forming MCM-41 is preferably a surfactant such as hexadecyltrimethylammonium bromide or tetraethylammonium hydroxide. Alternatively, the template agent may not be used. The hydrothermal treatment may be performed, for example, in a closed vessel under conditions at 80°C to 800°C and 0 to 2,000 kPa for 5 to 240 hours. The firing treatment may be performed, for example, in the air under conditions at 350°C to 850°C for 2 to 30 hours.

(Step S2: First Impregnation Step)

Next, the prepared precursor material (A) is impregnated with an iron-group element-containing solution, which contains at least an iron-group element, to form a precursor material (B).

The iron-group element-containing solution contains at least one iron-group element selected from the group consisting of nickel (Ni), iron (Fe), and cobalt (Co). The iron-group element-containing solution may be any solution containing a metal component (for example, metal ions) corresponding to the iron-group element ($M_1$) for forming the first catalyst particles of the catalyst structure. For example, the iron-group element-containing solution may be prepared by dissolving, in a solvent, a metal salt containing the iron-group element ($M_1$). Examples of such a metal salt include chlorides, hydroxides, oxides, sulfates, and nitrates, among which chlorides or nitrates are preferred. The solvent may be, for example, water, an organic solvent such as an alcohol, or a mixed solvent thereof.

Any suitable method may be used to impregnate the precursor material (A) with the iron-group element-containing solution. For example, before the first firing step (step S3) described later, the impregnation is preferably performed by adding the iron-group element-containing solution little by little in multiple portions to the powdery precursor material (A) being stirred. For easier infiltration of the iron-group element-containing solution into the inner pores of the precursor material (A), a surfactant is preferably added as an additive in advance before the addition of the iron-group element-containing solution. Such an additive will act to cover the outer surface of the precursor material (A) and thus to inhibit the deposition of the iron-group element-containing solution on the outer surface of the precursor material (A), so that the iron-group element-containing solution added subsequently will more easily enter the pores of the precursor material (A).

Examples of such an additive include nonionic surfactants, such as polyoxyethylene oleyl ether, polyoxyethylene alkyl ether, and polyoxyethylene alkyl phenyl ether. These surfactants have a large molecular size and thus cannot enter the inner pores of the precursor material (A), which suggests that they will not adhere to the interior of the pores and will not hinder the entrance of the iron-group element-containing solution into the pores. A method of adding the nonionic surfactant preferably includes, for example, adding 50% by mass to 500% by mass of the nonionic surfactant to the precursor material (A) before the first firing step (step S3) described later. If added in an amount of less than 50% by mass with respect to the mass of the precursor material (A), the nonionic surfactant may be less effective for the inhibition. If added in an amount of more than 500% by mass with respect to the mass of the precursor material (A), the nonionic surfactant may provide an excessively high viscosity. Therefore, the amount of the nonionic surfactant added to the precursor material (A) should be set within the above range.

The amount of the iron-group element-containing solution added to the precursor material (A) is preferably adjusted to a suitable level depending on the amount of the iron-group element ($M_1$) in the iron-group element-containing solution, with which the precursor material (A) is to be impregnated (in other words, the amount of the iron-group element ($M_1$) to be incorporated into the precursor material (B)). For example, when the precursor material (A) is impregnated with the iron-group element-containing solution before the first firing step (step S3) described later, the amount of the iron-group element-containing solution added to the precursor material (A) is preferably adjusted such that the ratio (atomic ratio $Si/M_1$) of the number of silicon (Si) atoms in the precursor material (A) to the number of the iron-group element ($M_1$) atoms in the iron-group element-containing solution is set to 10 to 1,000, more preferably 50 to 200. For example, when a surfactant is added as an additive to the precursor material (A) before the addition of the iron-group element-containing solution to the precursor material (A), the amount of the iron-group element-containing solution added to the precursor material (A) may be adjusted such that the atomic ratio $Si/M_1$ will be 50 to 200. In such a case, the total content of the iron-group element ($M_1$) forming the first catalyst particles will be adjusted to 0.50% by mass or more and 3.50% by mass or less with respect to the mass of the catalyst structure.

The content of the iron-group element ($M_1$) in the pores of the precursor material (B) will be approximately proportional to the amount of the iron-group element-containing solution added to the precursor material (A) as long as the metal concentration of the iron-group element-containing solution, the presence or absence of the additive, and other conditions such as temperature and pressure remain constant. The amount of the iron-group element ($M_1$) forming the first catalyst particles inside the carrier of the catalyst structure will also be proportional to the amount of the iron-group element ($M_1$) in the precursor material (B). Accordingly, when the amount of the iron-group element-containing solution added to the precursor material (A) is controlled within the above range, the inner pores of the precursor material (A) will be impregnated with a sufficient amount of the iron-group element-containing solution, and the content of the first catalyst particles in the carrier of the catalyst structure will be adjusted accordingly.

If necessary, washing treatment may be performed after the impregnation of the precursor material (A) with the iron-group element-containing solution. The washing liquid may be water, an organic solvent such as an alcohol, or a mixed solution thereof. Drying treatment is also preferably performed after the impregnation of the precursor material (A) with the iron-group element-containing solution and optionally after the washing treatment. Drying treatment may include natural drying overnight or so or drying at a high temperature of 150°C or less. The drying is preferably performed thoroughly. Otherwise, the precursor material (A) may contain a large amount of residual water derived from the iron-group element-containing solution or the washing liquid, which may cause the framework structure of the precursor material (A) as an ordered mesoporous material to collapse during the firing treatment described later.

(Step S3: First Firing Step)

Next, the precursor material (B) is fired to form a precursor material (C). The precursor material (B) is the product obtained through impregnating, with the iron-group element-containing solution, the precursor material (A) for obtaining the carrier having a porous structure and comprising the zeolite-type compound.

The first firing step (step S3) preferably includes firing, for example, under conditions at a temperature in a specific range for 2 to 30 hours in the air. The specific temperature range for the firing is preferably 350°C to 850°C and more preferably 500°C to 850°C. Such firing treatment allows the growth of crystals of the metal component deposited by the impregnation in the pores of the ordered mesoporous material, so that fine metal particles and fine metal oxide particles form in the pores.

(Step S4: Hydrothermal Treatment Step)

Next, the precursor material (C), obtained through firing the precursor material (B), is hydrothermally treated to form a precursor material (D). More specifically, the precursor material (C), obtained through firing the precursor material (B), is preferably mixed with a structure-directing agent to form a mixture solution, which is then hydrothermally treated to form a precursor material (D).

The structure-directing agent is a template agent for directing the framework structure of the carrier of the catalyst structure. The structure-directing agent may be, for example, a surfactant. The structure-directing agent is preferably selected depending on the framework structure of the carrier of the catalyst structure, and preferred examples thereof include tetramethylammonium bromide (TMABr), tetraethylammonium bromide (TEABr), tetrapropylammonium bromide (TPABr), and other surfactants.

The precursor material (C) and the structure-directing agent may be mixed during or before the hydrothermal treatment step (step S4). Any method may be used to prepare the mixture solution. The precursor material (C), the structure-directing agent, and the solvent may be mixed at the same time, or the precursor material (C) and the structure-directing agent may be separately dispersed into individual solvents, and then the resulting dispersion solutions may be mixed. The solvent may be, for example, water, an organic solvent such as an alcohol, or a mixed solvent thereof. Before the hydrothermal treatment, the mixture solution is preferably subjected to pH adjustment using an acid or a base.

The hydrothermal treatment may be carried out using a known method, for example, which is preferably performed in a closed vessel under conditions at 80°C to 200°C and 0 to 2,000 kPa for 5 to 100 hours. The hydrothermal treatment is also preferably performed in a basic atmosphere. Although the reaction mechanism is not necessarily clear, the hydrothermal treatment using the precursor material (C) as a starting material can gradually destroy the framework structure of the precursor material (C) as an ordered mesoporous material but can form a new framework structure (porous structure) for the carrier of the catalyst structure based on the action of the structure-directing agent while substantially maintaining the positions of first catalyst particles in the pores of the precursor material (C). The resulting precursor material (D) includes: a carrier of a porous structure; and first catalyst particles that are present inside the carrier and include at least the iron-group element, in which the carrier has channels connecting multiple pores derived from the porous structure, and at least some of the first catalyst particles are present in the channels of the carrier.

In this embodiment, the hydrothermal treatment step (step S4) includes: preparing a solution of a mixture of the precursor material (C) and the structure-directing agent; and hydrothermally treating the precursor material (C) in the mixture solution. This step is non-limiting, and alternatively, the precursor material (C) may be hydrothermally treated without being mixed with any structure-directing agent.

Preferably, the precipitate (precursor material (D)) resulting from the hydrothermal treatment is collected (for example, filtered off) and then optionally washed, dried, and fired. The washing liquid may be water, an organic solvent such as an alcohol, or a mixed solution thereof. The drying may include natural drying overnight or so or drying at a high temperature of 150°C or less. The drying is preferably performed thoroughly. Otherwise, the precipitate may contain a large amount of residual water, which may cause the framework structure for the carrier of the catalyst structure to collapse during the firing treatment. The firing treatment may be performed, for example, under conditions at 350°C to 850°C for 2 to 30 hours in the air. During such firing treatment, the structure-directing agent is burned away from the precursor material (D).

(Step S5: Second Impregnation Step)

Next, the precursor material (D) resulting from the hydrothermal treatment of the precursor material (C) is impregnated with a specific transition metal element-containing solution containing at least a specific transition metal element selected from transition metal elements with Redox capacity.

The specific transition metal element-containing solution may be any solution containing a transition metal element with Redox capacity for forming the second catalysts. For example, the specific transition metal element-containing solution may be prepared by dissolving, in a solvent, a metal salt containing zirconium (Zr). Examples of such a metal salt include chlorides, hydroxides, oxides, sulfates, and nitrates, among which chlorides or nitrates are preferred. The solvent may be, for example, water, an organic solvent such as an alcohol, or a mixed solvent thereof.

Any suitable method may be used to impregnate the precursor material (D) with the specific transition metal element-containing solution. For example, before the second firing step (step S6) described later, the impregnation is preferably performed by adding the specific transition metal element-containing solution little by little in multiple portions to the powdery precursor material (D) being stirred. Similar to the first impregnation step (step S2), for easier infiltration of the specific transition metal element-containing solution into the inner pores of the precursor material (D), a surfactant may be added as an additive in advance before the addition of the specific transition metal element-containing solution to the precursor material (D).

The amount of the specific transition metal element-containing solution added to the precursor material (D) is also preferably adjusted to a suitable level depending on the amount of the transition metal element in the specific transition metal element-containing solution, with which the precursor material (D) is to be impregnated. For example, when the precursor material (D) is impregnated with the specific transition metal element-containing solution before the second firing step (step S6) described later, the amount of the specific transition metal element-containing solution added to the precursor material (D) is preferably adjusted such that the percentage of the mass of the specific transition metal element in the specific transition metal element-containing solution to the total mass of the precursor material (D) and the added specific transition metal element is set to 1% by mass to 15% by mass, more preferably 1% by mass to 10% by mass. For example, when a surfactant is added as an additive to the precursor material (D) before the addition of the specific transition metal element-containing solution to the precursor material (D), the amount of the specific transition metal element-containing solution added to the precursor material (D) may be adjusted such that the percentage of the mass of the specific transition metal element in the specific transition metal element-containing solution to the total mass of the precursor material (D) and the added specific transition metal element is set to 1% by mass to 15% by mass. In such a case, the total content of the specific transition metal element contained in the obtained catalyst structure 1 can be adjusted to 0.85% by mass or more and less than 12.00% by mass with respect to the mass of the catalyst structure in a quantitative value based on ICP emission spectroscopy (high-frequency inductively coupled plasma emission spectroscopy).

If necessary, washing treatment may be performed after the impregnation of the precursor material (D) with the specific transition metal element-containing solution. Drying treatment is also preferably performed after the impregnation of the precursor material (D) with the specific transition metal element-containing solution and optionally after the washing treatment. The conditions for the washing and drying treatments may be the same as those for the washing and drying treatments performed after the impregnation with the iron-group element-containing solution.

(Step S6: Second Firing Step)

Next, the precursor material (D) impregnated with the specific transition metal element-containing solution is fired to form a catalyst structure.

The second firing step (step S6) preferably includes firing the precursor material (D), for example, under conditions at a temperature in a specific range for 2 to 30 hours in the air. The specific temperature range for the firing is preferably 350°C to 850°C and more preferably 500°C to 850°C. Such firing treatment allows the growth of crystals of the transition metal element component deposited by the impregnation in the ordered mesoporous material or on the outer surface of the ordered mesoporous material, resulting in formation of second catalysts. The resulting catalyst structure includes: a carrier of a porous structure; first catalyst particles that are present inside the carrier and include at least the iron-group element; and second catalysts that are present at least either inside the carrier or on the outer surface of the carrier and include at least the transition metal element, in which the carrier has channels connecting multiple pores derived from the porous structure, and at least some of the first catalyst particles are present in the channels of the carrier.

The precursor material (D) before performing the second impregnation step (step S5) and the second firing step (step S6), or the catalyst structure after performing the second impregnation step (step S5) and the second firing step (step S6) may be impregnated with a solution containing an additional element other than the iron-group element and the specific transition metal element, and fired. Here, examples of a solution containing the additional element include a solution containing a platinum-group element. Conditions for impregnating and firing the solution containing the additional element may be, for example, the same conditions as those in the second impregnation step (step S5) and the second firing step (step S6) described above.

Step S7: Reduction Step

The method of producing the catalyst structure according to the embodiment preferably includes a reduction step (step S7) that includes subjecting the fired precursor material (D) to reduction treatment after the second firing step (step S6). Specifically, in the method of producing the catalyst structure of the invention containing at least one iron-group element ($M_1$) selected from Co, Fe, and Ni, the iron-group element can undergo oxidation during the heat treatment in the steps (step S3 to S6) after the first impregnation step (step S2) for impregnation with the iron-group element-containing solution, in particular, during the heat treatment in the hydrothermal treatment step (step S4). Thus, after the second firing step (step S6), the catalyst particles in the resulting carrier of the catalyst structure may include fine metal oxide particles composed mainly of an oxide of the iron-group element. In order to obtain the catalyst structure including the first catalyst particles in the form of fine metal particles including the iron-group element, the fired precursor material (D) resulting from the second firing step (step S6) should preferably be subjected to reduction treatment in a reducing gas atmosphere, such as hydrogen gas. The reduction treatment reduces the fine metal oxide particles into fine metal particles in the carrier, namely, reduces the metal oxide into elementary metal. The resulting catalyst structure has the first catalyst particles in the form of fine metal particles inside the carrier.

The reduction step (step S7) may be performed as needed. For example, the catalyst structure may be used at least temporarily in a reducing atmosphere environment. In such a case, when exposed to the usage environment containing the reducing atmosphere for a certain period, the fine metal oxide particles, if any, will undergo reduction, so that the resulting catalyst structure will be the same as that resulting from the above reduction treatment. In such a case, the precursor of the catalyst structure including at least one selected from the first catalyst particles and the second catalysts in the form of fine metal oxide particles (catalyst particle precursors) may be used as it is.

[Modification of Method of Producing Catalyst Structure]

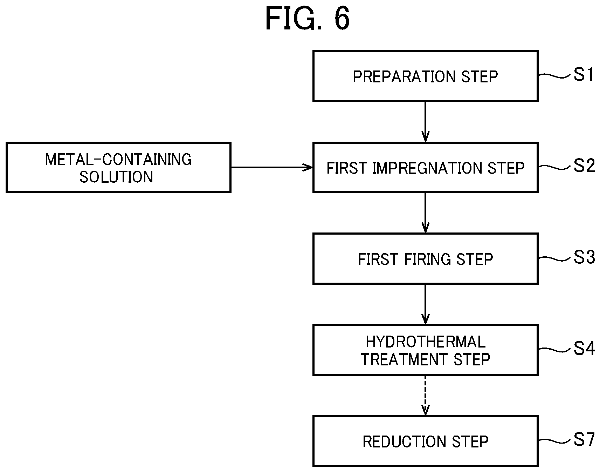

FIG. 6 is a flowchart showing a modification of the method of producing the catalyst structure according to the present invention. Hereinafter, some features of the catalyst structure production method, different from the features of the catalyst structure production method shown in the flowchart of FIG. 5, will be mainly described while the same features will not be repeatedly described or will be briefly described using the same reference signs for the same elements in the drawings.

FIG. 5 shows a non-limiting example of the method of producing the catalyst structure 1, including: a first impregnation step (step S2) that includes impregnating a precursor material (A) with an iron-group element-containing solution; a first firing step (step S3) that includes firing a precursor material (B) resulting from the impregnation with the iron-group element-containing solution; a hydrothermal treatment step (step S4) that includes hydrothermally treating a precursor material (C) resulting from the firing of the precursor material (B); a second impregnation step (step S5) that includes impregnating, with a specific transition metal element-containing solution, a precursor material (D) resulting from the hydrothermal treatment of the precursor material (C); and a second firing step (step S6) that includes firing a precursor material (D) resulting from the impregnation with the specific transition metal element-containing solution. Alternatively, for example, as shown in FIG. 6, the catalyst structure 1 is preferably produced by a method including: a first impregnation step (step S2) that includes impregnating a precursor material (A) with a metal-containing solution including an iron-group element-containing solution and a specific transition metal element-containing solution to form a precursor material (B); a first firing step (step S3) that includes firing the precursor material (B), which has been impregnated with the metal-containing solution; and a hydrothermal treatment step (step S4) that includes hydrothermally treating a precursor material (C) resulting from the firing of the precursor material (B). This process simultaneously forms, inside the carrier 10, the first catalyst particles and second catalysts respectively including the iron-group elements and transition metal elements and thus is more efficient for producing the catalyst structure 1.

(Step S2: First Impregnation Step)

This step includes impregnating a precursor material (A) with a metal-containing solution to form a precursor material (B), in which the precursor material (A) is for obtaining a carrier and comprising a zeolite-type compound and having a porous structure, and the metal-containing solution contains an iron-group element and a transition metal element.

The iron-group element-containing solution contains at least one iron-group element selected from the group consisting of nickel (Ni), iron (Fe), and cobalt (Co). The specific transition metal element-containing solution contains at least one transition metal element selected from transition metal elements with Redox capacity. The metal-containing solution may be any solution containing: a metal component corresponding to the iron-group element ($M_1$) for forming the first catalyst particles; and another metal component corresponding to the transition metal element for forming the second catalysts. For example, the metal-containing solution may be prepared by dissolving, in a solvent, a metal salt containing the iron-group element ($M_1$) and another metal salt containing the transition metal element. Here, the metal-containing solution may further contain an additional element such as a platinum-group element.

Any suitable method may be used to impregnate the precursor material (A) with the metal-containing solution. For example, before the first firing step (step S3) described later, the impregnation is preferably performed by adding the metal-containing solution little by little in multiple portions to the powdery precursor material (A) being stirred. For easier infiltration of the metal-containing solution into the inner pores of the precursor material (A), a surfactant is preferably added as an additive in advance before the addition of the metal-containing solution. Such an additive will act to cover the outer surface of the precursor material (A) and thus to inhibit the deposition of the metal-containing solution on the outer surface of the precursor material (A), so that the metal-containing solution added subsequently will more easily enter the pores of the precursor material (A).

The amount of the metal-containing solution added to the precursor material (A) is preferably adjusted to a suitable level depending on the amount of the iron-group element ($M_1$) and the specific transition metal element ($M_2$) in the metal-containing solution, with which the precursor material (A) is to be impregnated (in other words, the amount of the iron-group element ($M_1$) and the specific transition metal element ($M_2$) to be incorporated into the precursor material (B)). For example, when the precursor material (A) is impregnated with the metal-containing solution before the first firing step (step S3) described later, the amount of the metal-containing solution added to the precursor material (A) is preferably adjusted such that the ratio (atomic ratio Si/$M_1$) of the number of silicon (Si) atoms in the precursor material (A) to the number of the iron-group element ($M_1$) atoms in the metal-containing solution is set to 10 to 1,000, more preferably 50 to 200. For example, when a surfactant is added as an additive to the precursor material (A) before the addition of the metal-containing solution to the precursor material (A), the amount of the metal-containing solution added to the precursor material (A) may be adjusted such that the atomic ratio $Si/M_1$ will be 50 to 200. In such a case, the total content of the iron-group element ($M_1$) forming the first catalyst particles will be adjusted to 0.50% by mass or more and 3.50% by mass or less with respect to the mass of the catalyst structure.

Further, when the precursor material (A) is impregnated with the metal-containing solution before the first firing step (step S3) described later, the concentration and amount of the metal-containing solution added to the precursor material (A) are preferably adjusted such that the percentage of the mass of the specific transition metal element to the total mass of the precursor material (A) and the added specific transition metal element is set in the range of 1% by mass or more and 15% by mass or less. For example, when the concentration and amount of the metal-containing solution added to the precursor material (A) are preferably adjusted such that the percentage of the mass of the specific transition metal element to the total mass of the precursor material (A) and the added specific transition metal element is set in the range of 1% by mass or more and 15% by mass or less, the total content of the specific transition metal element in the obtained catalyst structure 1 can be adjusted in the range of 0.85% by mass or more and less than 12.00% by mass in a quantitative value based on ICP emission spectroscopy.

The content of the iron-group element ($M_1$) in the pores of the precursor material (B) will be approximately proportional to the amount of the metal-containing solution added to the precursor material (A) as long as the metal concentration of the metal-containing solution, the presence or absence of the additive, and other conditions such as temperature and pressure remain constant. The amount of the iron-group element ($M_1$) forming the first catalyst particles inside the carrier of the catalyst structure will also be proportional to the amount of the iron-group element ($M_1$) in the precursor material (B). Accordingly, when the amount of the metal-containing solution added to the precursor material (A) is controlled within the above range, the inner pores of the precursor material (A) will be impregnated with a sufficient amount of the metal-containing solution, and the content of the first catalyst particles and the second catalysts in the carrier of the catalyst structure will be adjusted accordingly.

If necessary, washing treatment may be performed after the impregnation of the precursor material (A) with the metal-containing solution. Drying treatment is also preferably performed after the impregnation of the precursor material (A) with the metal-containing solution and optionally after the washing treatment.

(Step S3: First Firing Step)

Next, the precursor material (B) is fired to form a precursor material (C). The precursor material (B) is the product obtained by impregnating the precursor material (A) with the metal-containing solution containing the iron-group elements and transition metal elements.

The first firing step (step S3) preferably includes firing, for example, under conditions at a temperature in a specific range for 2 to 30 hours in the air. The specific temperature range for the firing is preferably 350°C to 850°C and more preferably 500°C to 850°C. Such firing treatment allows the growth of crystals of the metal component deposited by the impregnation in the pores of the ordered mesoporous material, so that fine metal particles and fine metal oxide particles form in the pores from the metal-containing solution.

(Step S4: Hydrothermal Treatment Step)

Next, the precursor material (C), obtained through firing the precursor material (B), is hydrothermally treated to form a catalyst structure. More specifically, the precursor material (C), obtained through firing the precursor material (B), is preferably mixed with a structure-directing agent to form a mixture solution, which is then hydrothermally treated to form a catalyst structure.

The hydrothermal treatment may be carried out using a known method, for example, which is preferably performed in a closed vessel under conditions at 80°C to 200°C and 0 to 2,000 kPa for 5 to 100 hours. The hydrothermal treatment is also preferably performed in a basic atmosphere. The resulting catalyst structure includes: a carrier of a porous structure; first catalyst particles that are present inside the carrier and include at least the iron-group element; and second catalysts that are present inside the carrier and include at least the transition metal element, in which the carrier has channels connecting multiple pores derived from the porous structure, and at least some of the first catalyst particles and the second catalysts are present in the channels of the carrier.

(Step S7: Reduction Step)

The method of producing the catalyst structure according to the embodiment preferably includes a reduction step (step S7) that includes subjecting, to reduction treatment, the catalyst structure resulting from the hydrothermal step (step S4). The reduction treatment reduces fine metal oxide particles into fine metal particles in the carrier, namely, reduces the metal oxide into elementary metal. The resulting catalyst structure has the first catalyst particles in the form of fine metal particles inside the carrier.

The reduction step (step S7) may be performed as needed. For example, the catalyst structure may be used at least temporarily in a reducing atmosphere environment. In such a case, when exposed to the usage environment containing the reducing atmosphere for a certain period, the fine metal oxide particles, if any, will undergo reduction, so that the resulting catalyst structure will be the same as that resulting from the above reduction treatment.

[Applications of Catalyst Structure]

In particular, the catalyst structure of the present invention is suitable for use in chemical reactions that potentially cause oxidation of the first catalyst particles or coke production (coking) and thus potentially cause a decrease in catalytic activity.

As an example of such application, a synthesis gas production method is provided including carrying out dry reforming using the catalyst structure 1 of the present invention to synthesize carbon monoxide and hydrogen from methane and carbon dioxide. In this method, the catalyst structure 1 being used includes: the carrier 10 including a zeolite-type compound and having a porous structure; the first catalyst particles 20 that are present at least in channels 11 of the carrier 10 and include the iron-group element; and the second catalysts 30 that are present at least either inside the carrier 10 or on the outer surface of the carrier 10 and include the transition metal element. Namely, the present invention provides a synthesis gas production method that includes synthesizing carbon monoxide and hydrogen from methane and carbon dioxide using the catalyst structure 1 described above.

Using this method, the catalyst structure is less prone to oxidation of the first catalyst particles 20, which would otherwise be induced by water produced by a side reaction of the chemical reaction for dry reforming, and less prone to a decrease in catalytic activity, which would otherwise be caused by the production of coke on the first catalyst particles 20.

The present invention may also provide a synthesis gas production device including the catalyst structure or a precursor of the catalyst structure. Such a synthesis gas production device may be any type capable of allowing dry reforming reaction to proceed using the catalyst structure described above. Such a synthesis gas production device including the catalyst structure according to the present invention will also bring about advantageous effects as described above.

While catalyst structures for use in synthesis gas production, synthesis gas production devices, and methods of producing catalyst structures for use in synthesis gas production have been described according to embodiments of the present invention, it will be understood that the embodiments are not intended to limit the present invention and may be altered or modified in various ways based on the technical idea of the present invention.

EXAMPLES

(Present Invention Examples 1 to 5)

[Synthesis of Precursor Material (A)]

An aqueous solution of a mixture of a silica agent (tetraethoxysilane (TEOS) manufactured by Wako Pure Chemical Industries, Ltd.) and hexadecyltrimethylammonium bromide (CTAB) (manufactured by Wako Pure Chemical Industries, Ltd.) for serving as a template agent (structure-directing agent) was prepared, then subjected to pH adjustment as needed, and then hydrothermally treated in a closed vessel at 80°C to 350°C for 100 hours. Subsequently, the produced precipitate was filtered off, then washed with water and ethanol, and then fired in air at 600°C for 24 hours to give a precursor material (A) of the type and pore size shown in Table 1 (preparation step (step S1)).

[Preparation of Precursor Materials (B) and (C)]

Next, nickel(II) nitrate hexahydrate (manufactured by Wako Pure Chemical Industries, Ltd.) (corresponding to a metal salt containing an iron-group element) was dissolved in water to form an iron-group element-containing solution.

The powdery precursor material (A) was pretreated by adding thereto an aqueous solution of polyoxyethylene (15) oleyl ether (NIKKOL BO-15V, manufactured by Nikko Chemicals Co., Ltd.) as an additive (nonionic surfactant). Subsequently, the powdery precursor material (A) was impregnated with the iron-group element-containing aqueous solution by adding thereto the solution little by little in multiple portions (first impregnation step (step S2)). The precursor material (A) impregnated with the solution was then dried at room temperature (20°C ± 10°C) for at least 12 hours to give a precursor material (B).

In this process, the amount of the iron-group element-containing aqueous solution added to the precursor material (A) was adjusted such that the ratio (atomic ratio Si/$M_1$) of the silicon (Si) content of the precursor material (A) to the iron-group element ($M_1$) content of the iron-group element-containing aqueous solution was 100. The amount of the iron-group element-containing aqueous solution added at this time is such that the percentage of the mass of nickel (Ni) with respect to the total mass of the precursor material (A) and nickel (Ni), which is the added iron-group element ($M_1$) is 1% by mass.

Subsequently, the precursor material (B) resulting from the impregnation with the metal-containing aqueous solution was fired in air at 550°C for 24 hours (first firing step (step S3)) to form a precursor material (C).

[Preparation of Precursor Material (D)]

An aqueous solution of a mixture of the resulting precursor material (C) and tetrapropylammonium bromide (TPABr) for serving as a structure-directing agent was prepared and then subjected to hydrothermal treatment in a closed vessel at 120°C to 150°C for 72 hours so that the precursor material (C) was hydrothermally treated (hydrothermal treatment step (step S4)).

Subsequently, the produced precipitate was filtered off, then washed with water, then dried at 100°C for at least 12 hours, and then fired in air at 550°C for 24 hours to form a precursor material (D).

[Carrying of Specific Transition Metal Element into Precursor Material (D)]

In Present Invention Examples 1 to 5, catalyst structures carrying zirconium as the specific transition metal element were obtained by impregnating the obtained precursor material (D) with a specific transition metal element-containing aqueous solution.

Among them, the specific transition metal element-containing aqueous solution was prepared by dissolving zirconium nitrate dihydrate (chemical formula: $ZrO(NO_3)_2 \cdot 2H_2O$, manufactured by Wako Pure Chemical Industries, Ltd.), which is a metal salt containing zirconium, in water.

The precursor material (D) was impregnated with the transition metal element-containing aqueous solution by adding thereto the solution little by little in multiple portions (second impregnation step (step S5)). In this way, zirconium (Zr) was carried into the precursor material (D). Subsequently, the precursor material (D) impregnated with the solution was dried at a temperature of 100°C for 2 hours.

Here, the amount of the specific transition metal element-containing aqueous solution added to the precursor material (D) in the second impregnation step was adjusted so that the percentage of the mass of zirconium, which is the specific transition metal element, to the total mass of the precursor material (D) and the added specific transition metal element had the value shown in Table 1.

The precursor material (D) impregnated with the transition metal element-containing aqueous solution was fired in air at 500°C for 3 hours to form a catalyst structure (E) (second firing step (step S6)) (Present Invention Examples 1 to 5).

(Present Invention Example 6)

In Present Invention Example 6, the catalyst structure (E) obtained by performing the second firing step (step S6) was impregnated with a platinum-containing aqueous solution to obtain a catalyst structure carrying zirconium (Zr) and platinum (Pt). Here, the conditions for preparing the catalyst structure (E) are the same as those of the catalyst structure of Present Invention Example 2.

Among them, the platinum-containing aqueous solution was prepared by dissolving tetraammineplatinum (II) nitrate (chemical formula: $Pt(NH_3)_4(NO_3)_2$, manufactured by Sigma-Aldrich, product number: 278726), which is a metal salt containing platinum, in water.

The catalyst structure (E) was impregnated with the obtained platinum-containing aqueous solution by adding thereto the solution little by little in multiple portions, so that platinum was carried onto the structure. The structure was then dried at a temperature of 100°C for 2 hours.

Here, the amount of the platinum-containing aqueous solution added to the catalyst structure (E) in the second impregnation step was adjusted so that the percentage of the mass of platinum (Pt) with respect to the total mass of the structure (E) and the added platinum had the value shown in Table 1.

Subsequently, the catalyst structure (E) impregnated with the platinum-containing aqueous solution was fired in air at 450°C for 3 hours to form a catalyst structure (Present Invention Example 6).

(Comparative Example 1)

In Comparative Example 1, the precursor material (D) before being impregnated with the specific transition metal element-containing aqueous solution was used as the catalyst structure. Here, the conditions for preparing the precursor material (D) are the same as in Present Invention Examples 1 to 5.

(Comparative Examples 2 and 3)

In Comparative Examples 2 and 3, catalyst structures carrying platinum (Pt) were obtained by impregnating the precursor material (D) with a platinum-containing aqueous solution. The conditions for preparing the precursor material (D) are the same as in Present Invention Examples 1 to 5.

Among them, the platinum-containing aqueous solution was prepared by dissolving tetraammineplatinum (II) nitrate (chemical formula: $Pt(NH_3)_4(NO_3)_2$, manufactured by Sigma-Aldrich, product number: 278726), which is a metal salt containing platinum, in water.

The precursor material (E) was impregnated with the obtained platinum-containing aqueous solution by adding thereto the solution little by little in multiple portions (second impregnation step (step S5)), so that platinum was carried onto the structure. Then, it was dried at a drying temperature of 100°C for 2 hours.

Here, the amount of the platinum-containing aqueous solution added to the precursor material (D) in the second impregnation step was adjusted so that the percentage of the mass of platinum (Pt) with respect to the total mass of the precursor material (D) and the added platinum had the value shown in Table 1.

Subsequently, the precursor material (D) impregnated with the platinum-containing aqueous solution was fired in air at 450°C for 3 hours to form a catalyst structure (second firing step (step S6)) (Comparative Examples 2 and 3).

Evaluations

The catalyst structures of Present Invention Examples 1 to 5 and Comparative Example 1 were subjected to evaluations (A) to (F) shown below. Among them, Table 1 shows the results of evaluations (A) to (E).

(A) Structure of Carrier (Zeolite-Type Compound) and Average Inner Diameter of Channels

The catalyst structures of Present Invention Examples 1 to 6 and Comparative Examples 1 to 3 were evaluated for structural properties using an X-ray diffraction (XRD) analyzer (D8 ADVANCE manufactured by Bruker). As a result, each of the catalyst structures of Present Invention Examples and Comparative Examples showed a peak pattern matching that of MFI-type zeolite registered in the powder X-ray diffraction database PDF-2 of The International Centre for Diffraction Data (ICDD). Furthermore, according to the database of the Structure Commission of the International Zeolite Association, since the inner diameter of the channel of the MFI-type zeolite is 0.51 nm to 0.56 nm, it is speculated that the inner diameters of the channels of all the catalyst structures of Present Invention Examples 1 to 6 and Comparative Examples 1 to 3 are approximately 0.5 nm.

(B) Location and Size of First Catalyst Particles

Samples for observation were prepared by grinding technique from the precursor materials (D) prepared in Present Invention Examples 1 to 6 (samples resulting from the hydrothermal treatment step (step S4) in the course of the process). The cross-section of each of the samples was observed using a transmission electron microscope (TEM) (TITAN G2 manufactured by FEI Company). As a result, the catalyst structures of Present Invention Examples 1 to 6 and Comparative Examples 1 to 3 were observed to have a zeolite carrier and fine metal particles held inside the zeolite carrier.

The precursor materials (D) prepared in Present Invention Examples 1 to 6 and Comparative Examples 1 to 3 (samples resulting from the hydrothermal treatment step (step S4) in the course of the process) were subject to cross-section cutting using focused ion beam (FIB). The resulting crosssections were subjected to elemental analysis using a scanning electron microscope (SEM) (SU8020 manufactured by Hitachi High Technologies Co., Ltd.) and an energy dispersive X-ray spectrometer (EDX) (X-Max manufactured by Horiba, Ltd.). As a result, nickel (Ni) (iron-group element) was detected from the interior of the carrier in the catalyst structures of Present Invention Examples 1 to 6 and Comparative Examples 1 to 3.

The precursor materials (D) prepared in Present Invention Examples 1 to 6 and Comparative Examples 1 to 3 (samples resulting from the hydrothermal treatment step (step S4) in the course of the process) were subjected to small angle X-ray scattering (SAXS) analysis for determination of the average particle size and dispersed state of the first catalyst particles present inside the carrier. The SAXS measurement was carried out using the beamline BL19B2 of SPring-8. The resulting SAXS data were subjected to fitting by Guinier approximation using a spherical model to determine the average particle size $D_{C1}$ of the first catalyst particles. The results showed that the catalyst structures of Present Invention Examples 1 to 6 and Comparative Examples 1 to 3 had, inside the carrier, first catalyst particles with uniform sizes of 2 nm to 5 nm in an extremely highly dispersed state.

(C) Location of Second and Third Catalysts

Using an SEM (SU8020 manufactured by Hitachi High Technologies Corp.) and an EDX (X-Max manufactured by Horiba, Ltd.), the surfaces of the catalyst structures of Present Invention Examples 1 to 6 and Comparative Examples 1 to 3 were observed to determine the locations of the second and third catalysts.

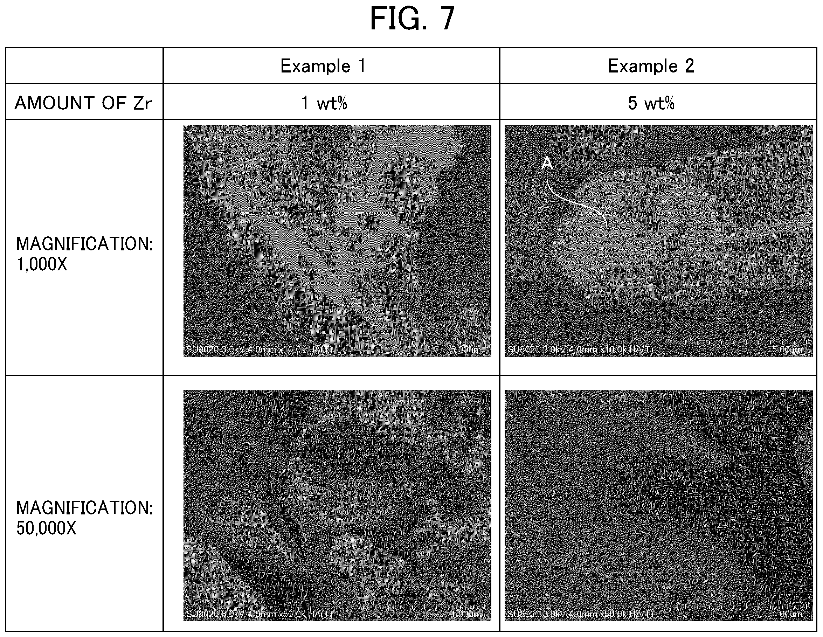

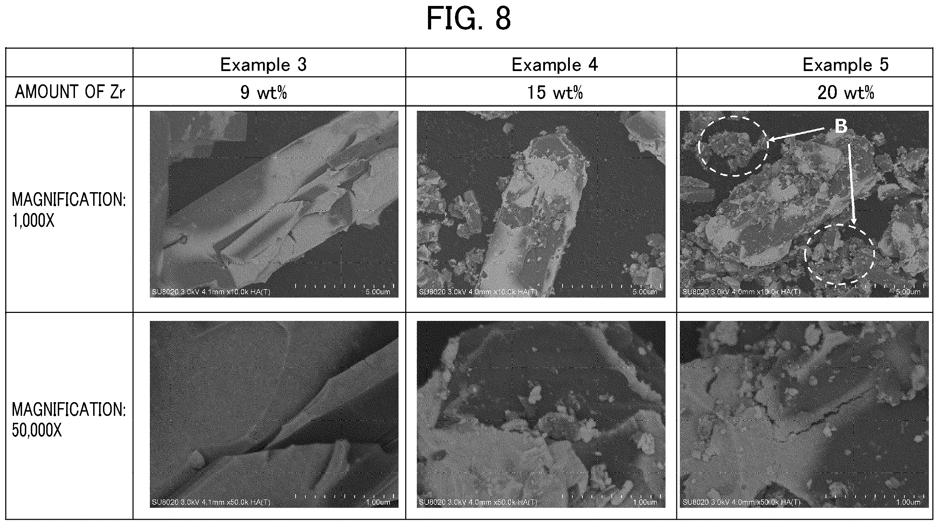

FIG. 7 shows scanning electron microscope (SEM) photographs of the surfaces of the catalyst structures of Present Invention Examples (Examples) 1 and 2 at magnifications of 1,000X and 50,000X. FIG. 8 shows scanning electron microscope (SEM) photographs of the surfaces of the catalyst structures of Present Invention Examples (Examples) 3 to 5 at magnifications of 1,000X and 50,000X. As shown in FIGS. 7 and 8, in the catalyst structures of Present Invention Examples 1 to 5, zirconium (Zr), which is a specific transition metal element, was present in the form of a film on the outer surface of the carrier. More specifically, zirconium (Zr) was present in the portion A shown in FIG. 7. In addition, in the catalyst structure of Present Invention Example 6, platinum (Pt) particles, which are platinum-group elements, and zirconium (Zr) adhered in the form of a film were present on the outer surface of the carrier. On the other hand, in the catalyst structures of Comparative Examples 1 to 3, the presence of zirconium (Zr) on the outer surface and inside of the carrier could not be confirmed. Among them, in the catalyst structures of Comparative Examples 2 and 3, the presence of platinum (Pt), which is a platinum-group element, was confirmed on the outer surface of the carrier.

(D) Metal Species and Contents of First Catalyst Particle and Second and third Catalysts in Catalyst Structure

Further, in the catalyst structures of Present Invention Examples 1 to 6 and Comparative Examples 1 to 3, the contents (% by mass) of the iron-group element constituting the first catalyst particles, the specific transition metal element constituting the second catalysts, and the platinum-group element constituting the third catalysts were measured for each metal species. Here, the contents of iron-group elements, specific transition metal elements, and platinum-group elements for each metal species were quantified using ICP emission spectroscopy (high-frequency inductively coupled plasma emission spectroscopy, Agilent Technologies, Inc., product number: 5110IPC-OES). Table 1 shows the results.

(E) Evaluation of Initial Catalytic Properties

The initial catalytic properties at an initial stage of dry reforming reaction, of the catalyst structures of Present Invention Examples 1 to 5 and Comparative Examples 1 and 2 were evaluated under the conditions shown below.

The catalyst structure (140 mg to 160 mg) of each of Present Invention Examples 1 to 5 and Comparative Examples 1 and 2 was charged into an atmospheric pressure flow reactor to form a catalyst layer, which was subjected to reduction treatment at 850°C for 90 minutes with hydrogen gas being supplied.

Subsequently, while the temperature was maintained at 700°C, a mixed gas of carbon dioxide (5 mL/minute) and methane (5 mL/minute) ($CH_4$/$CO_2$ ratio = 1.0) was supplied as a raw material gas at a gas hourly space velocity (GHSV) of 2,200h$^{-1}$ to the catalyst structure so that a catalytic reaction (dry reforming reaction) was allowed to proceed using the catalyst structure.

One hour after the start of the catalytic reaction, the flow rate of the synthesis gas was measured at the outlet of the reactor, and the synthesis gas obtained from the outlet of the reactor was collected. The components of the collected synthesis gas were analyzed using a hydrogen flame ionization detector (FID) (GC-14B (product name) manufactured by Shimadzu Corporation) and a thermal conductivity detector (TCD) (GC-8A (product name) manufactured by Shimadzu Corporation). The measured flow rate of the synthesis gas and the results of the FID analysis and the TCD analysis were used to calculate the content of methane ($CH_4$) in the synthesis gas, which was used to calculate the $CH_4$ conversion rate according to formula (I) below.

```
CH₄ conversion rate (%) = (the CH₄ content (cm³/h) of the gas
    at the outlet / the CH₄ content (cm³/h) of the gas at the
    inlet) x 100        ·· Formula (I)
```

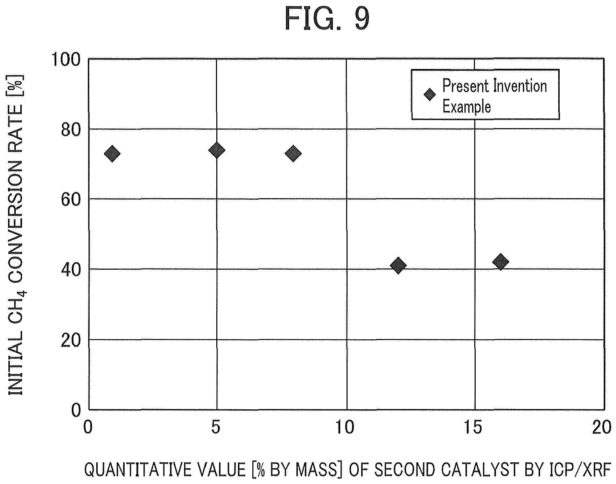

FIG. 9 is a graph showing the relationship of quantitative values based on ICP emission spectroscopy (inductively coupled plasma emission spectroscopy), of zirconium (Zr), which is a transition metal element with Redox capacity, and the $CH_4$ conversion rate [%] at the initial reaction time, for the catalyst structures of Present Invention Examples, in which the horizontal axis is the quantitative value of zirconium (Zr) and the vertical axis is the $CH_4$ conversion rate; As shown in the graph of FIG. 9, among Present Invention Examples, particularly, all the catalyst structures of Present Invention Examples 1 to 3 had a $CH_4$ conversion rate of 50% or more at the initial stage of the reaction. Therefore, particularly, the catalyst structures of Present Invention Examples 1 to 3 are expected to further increase the catalytic activity when the catalyst structures for synthesis gas production are used in the dry reforming reaction.

On the other hand, in the catalyst structures of Present Invention Examples 4 and 5, the $CH_4$ conversion rate at the initial stage of the reaction was below 50%. It is considered that one of the causes thereof is partial collapse of the porous structure of the zeolite as indicated by the portion B in the SEM photographs of FIG. 8.

(F) Evaluation of Catalyst Life

As an example of evaluation for maintenance of excellent catalytic activity over a long period of time, among the catalyst structures of Present Invention Examples 1 to 6 and Comparative Examples 1 to 3, the catalyst life was evaluated for Present Invention Examples 1 to 3 and 6 and Comparative Examples 1 to 3 in which the value of the $CH_4$ conversion rate at the initial stage of the reaction was close to the value of the theoretically calculated $CH_4$ equilibrium conversion rate ($CH_4$ equilibrium conversion rate when $CH_4/CO_2$ ratio = 1.0 is approximately 73%). On the other hand, the catalyst life of Present Invention Examples 3 and 4 was not evaluated because the initial catalytic properties were low.

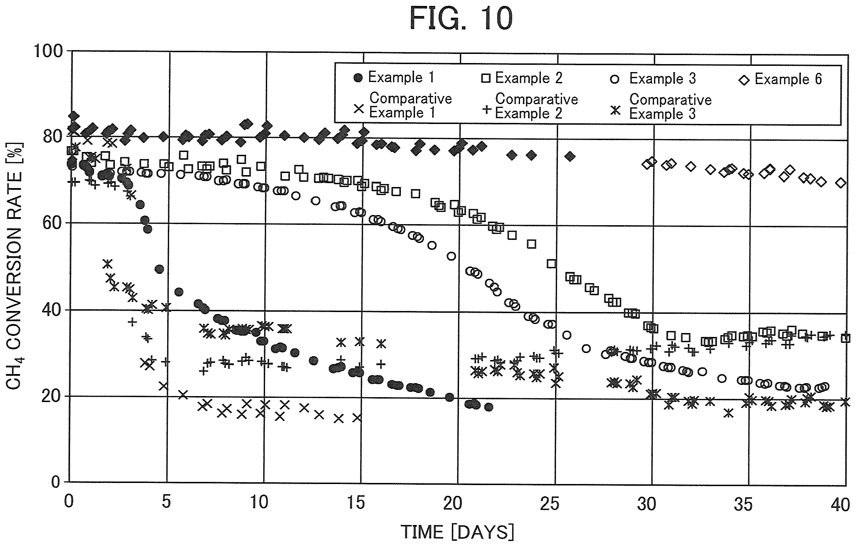

In the method for evaluating the life of the catalyst, the catalytic reaction (dry reforming reaction) in (E) Evaluation of Initial Catalytic Properties described above was performed continuously, and the $CH_4$ conversion rate was calculated in the same procedure. Then, a graph showing the relationship between the number of days (reaction days (days)) from the start of the catalytic reaction on the horizontal axis and the $CH_4$ conversion rate (methane conversion rate) [%] on the vertical axis was obtained. The obtained graph is shown in FIG. 10.

EP 4 316 657 A1

[Table 1]

| | Catalyst structure | | | | | | | | | | | | | | |
| | (A) Structure of carrier and average inner diameter of channels | | Metal species and contents added as first catalyst particles and second and third catalysts | | | | | | | (B) & (C) Locations and sizes of first catalyst particle and second and third catalysts | | | | (D) Metal species and contents of first catalyst particle and second and third catalysts | | |
| | Structure | Average inner diameter ($D_F$) of whole channels | Metal species of iron-group element forming first catalyst particle | Amount of iron-group element-containing aqueous solution | | Metal species of specific transition metal element forming second catalyst | Amount of specific transition metal element-containing aqueous solution | Metal species of platinum-group element forming third catalyst | Amount of platinum-group element-containing aqueous solution | Location of first catalyst particle | Average particle size ($D_{C1}$) of first catalyst particles | Location of second catalysts | Location of third catalysts | Metal species and content of first catalyst particle | Metal species and content of second catalyst | Metal species and content of third catalyst |
| Analysis method | XRD /TEM | XRD ITEM | - | - | - | - | - | - | - | Cross-sectional TEM/ cross-sectional EDX | SAXS | SEM | SEM | ICP /XRF | ICP /XRF | ICP /XRF |
| Units | - | nm | - | % by mass | Si/Ni ratio | - | 8 by mass | - | 8 by mass | - | nm | - | - | 8 by mass | 8 by mass | 8 by mass |

(continued)

| | Catalyst structure | | | | | | | | | | | | | | |
| | (A) Structure of carrier and average inner diameter of channels | | Metal species and contents added as first catalyst particles and second and third catalysts | | | | | | (B) & (C) Locations and sizes of first catalyst particle and second and third catalysts | | | | (D) Metal species and contents of first catalyst particle and second and third catalysts | | |
| | Structure | Average inner diameter ($D_F$) of whole channels | Metal species of iron-group element forming first catalyst particle | Amount of iron-group element-containing aqueous solution | Metal species of specific transition metal element forming second catalyst | Amount of specific transition metal element-containing aqueous solution | Metal species of platinum-group element forming third catalyst | Amount of platinum-group element-containing aqueous solution | Location of first catalyst particle | Average particle size ($D_{C1}$) of first catalyst particles | Location of second catalysts | Location of third catalysts | Metal species and content of first catalyst particle | Metal species and content of second catalyst | Metal species and content of third catalyst |
|---|---|---|---|---|---|---|---|---|---|---|---|---|---|---|---|
| Present Invention Example 1 | MFI | Approximately 0.5 | Ni | 1    100 | Zr | 1 | Absent | - | Carrier interior | 2.5 | Carrier surface | - | Ni : 0.85 | Zr : 0.92 | - |
| Present Invention Example 2 | | | | | | 5 | | - | | | | - | Ni : 0.79 | Zr : 5.00 | - |
| Present Invention Example 3 | | | | | | 9 | Absent | - | | | | - | Ni : 0.73 | Zr : 7.95 | - |
| Present Invention Example 4 | | | | | | 15 | | - | | | | - | Ni : 0.59 | Zr : 12.00 | - |
| Present Invention Example 5 | | | | | | 20 | | - | | | | - | Ni : 0.59 | Zr : 16.00 | - |
| Present Invention Example 6 | | | | | | 5 | Pt | 2 | | | | Carrier surface | Ni : 0.73 | Zr : 4.31 | Pt : 1.90 |

(continued)

| | | (A) Structure of carrier and average inner diameter of channels | | Metal species and contents added as first catalyst particles and second and third catalysts | | | | | | | (B) & (C) Locations and sizes of first catalyst particle and second and third catalysts | | | | (D) Metal species and contents of first catalyst particle and second and third catalysts | | |
|---|---|---|---|---|---|---|---|---|---|---|---|---|---|---|---|---|---|
| | | Structure | Average inner diameter ($D_F$) of whole channels | Metal species of iron-group element forming first catalyst particle | Amount of iron-group element-containing aqueous solution | Metal species of specific transition metal element forming second catalyst | Amount of specific transition metal element-containing aqueous solution | Metal species of platinum-group element forming third catalyst | Amount of platinum-group element-containing aqueous solution | Location of first catalyst particle | Average particle size ($D_{C1}$) of first catalyst particles | Location of second catalysts | Location of third catalysts | Metal species and content of first catalyst particle | Metal species and content of second catalyst | Metal species and content of third catalyst |
| Comparative Example 1 | | | | | | | - | Absent | - | | | | - | Ni : 0.93 | **_-_** | - |
| Comparative Example 2 | MFI | Approximately 0.5 | Ni | | **Absent** | - | Pt | 1 | Carrier surface | | **Absent** | Carrier surface | Ni : 0.81 | **_-_** | Pt : 0.58 |
| Comparative Example 3 | | | | | | - | | 2 | | | | | Ni : 1.40 | **_-_** | Pt : 1.90 |

Note: Results outside the scope of the present invention are indicated by the underlined bold word in the table.
In the table, the sign "-" means that the item was not evaluated.

FIG. 10 is a graph showing the relationship between the time (reaction time (days)) from the start of the catalytic reaction and the $CH_4$ conversion rate [%] for the catalyst structures of Present Invention Examples 1 to 4 and 6 and Comparative Examples 1 to 3, in which the horizontal axis is the reaction time and the vertical axis is the $CH_4$ conversion rate. As is clear from FIG. 10, in the catalyst structure (Present Invention Examples 1 to 4 and 6) in which it was confirmed that the first catalyst particles containing an iron-group element were carried inside the carrier, and the second catalysts containing zirconium as a transition metal element with Redox capacity were carried on the surface of the carrier, the rate of decrease in the $CH_4$ conversion rate slowed down in the evaluation of catalyst life as compared to the catalyst structure (Comparative Example 1) in which the second catalysts are not carried. Among them, in the catalyst structure (Present Invention Example 6) in which it was confirmed that the first catalyst particles (nickel particles) containing an iron-group element were carried inside the carrier, the second catalysts containing zirconium as a transition metal element with Redox capacity were carried on the surface of the carrier, and the third catalysts containing platinum as a platinum-group element were carried on the outer surface of the carrier, the rate of decrease in the $CH_4$ conversion rate slowed down in the evaluation of catalyst life as compared to the catalyst structure (Comparative Example 3) in which the second catalysts are not carried.

In addition, in the catalyst structures of Present Invention Examples 2 to 3 and 6, the second catalysts were carried on the surface of the carrier, and the methane conversion rate after 30 days from the start of the catalytic reaction was 20% or more. This result was equal to or better than that of the catalyst structures (Comparative Examples 2 and 3) containing platinum without carrying the second catalysts.

Among them, the catalyst structure of Present Invention Example 6 carries 4.33% by mass of zirconium as a transition metal element, and the amount of zirconium carried is close to that of Present Invention Example 2, which is 5.00% by mass. The catalyst structure of Present Invention Example 6 had a methane conversion rate of around 80% after 30 days from the start of the catalytic reaction. On the other hand, with the catalyst structure of Present Invention Example 2, the methane conversion rate decreased to around 40% after 30 days from the start of the catalytic reaction. Since Present Invention Example 6 is superior to Present Invention Example 2 in terms of the methane conversion rate 30 days after the start of the catalytic reaction, it has been found from this result that the replacement of the catalyst structure is greatly reduced in the catalyst structure of Present Invention Example 6. In particular, the catalyst structure of Present Invention Example 6 contains platinum, which belongs to a platinum-group element, on the outer surface of the carrier, and the material cost is high when compared with catalyst structures of the same mass. However, since it is possible to reduce the amount of the catalyst structure used, it is also possible to suppress the running cost in the catalytic reaction.

Therefore, in Present Invention Examples 1 to 3 and 6, it was found that the catalyst structure in which it was confirmed that the first catalyst particles containing an iron-group element are carried inside the carrier, and the second catalysts containing a transition metal element with Redox capacity are carried at least either inside or on the outer surface of the carrier can maintain excellent catalytic activity over a long period of time.

Furthermore, the structures produced in Present Invention Examples 1 to 3 and 6 exhibited results comparable to those of the catalyst structures of Comparative Examples 1 to 3 in terms of catalytic activity in the initial stage of the dry reforming reaction. Therefore, it was found that the catalyst structures produced in Present Invention Examples 1 to 3 and 6 are also excellent in catalytic activity in the initial stage of the catalytic reaction.

(G) $H_2$-TPR Measurement of Catalyst Structure

In order to confirm that zirconium (Zr), which is a transition metal element with Redox capacity, can suppress the oxidation of the first catalyst particles inside the carrier, $H_2$-TPR measurements were performed on the catalyst structures before and after the catalyst life evaluation test. $H_2$-TPR measurement was performed using BELCAT II (manufactured by MicrotracBEL Corp.) as a measuring device after pretreatment. Here, the pretreatment was carried out by heating approximately 50 mg of the catalyst structure at a pretreatment temperature of 700°C for a retention time of 90 minutes while flowing the gas (flow rate: 50 ccm) shown in Table 2. Here, the catalyst structure before the catalyst life evaluation was subjected to pretreatment by flowing a mixed gas containing 5% of hydrogen ($H_2$) gas and 95% of argon (Ar) gas, so that Nickel (Ni) as the first catalyst particles was brought to a reduced state. In addition, the catalyst structure after the catalyst life evaluation was subjected to pretreatment by flowing argon (Ar) gas instead of the mixed gas, so that the pretreatment is performed under the same conditions in a range where the oxidation state of the nickel (Ni) particles was maintained.

After the pretreatment, the catalyst structure was heated to 900°C at a temperature rise rate of 10°C/min while flowing a mixed gas (flow rate: 50 ccm) containing 5% of hydrogen ($H_2$) gas and 95% of argon (Ar) gas, and the moisture contained in the gas obtained at that time was detected by a thermal conductivity detector (TCD). This $H_2$-TPR measurement was performed on the catalyst structures of Present Invention Example 2 and Comparative Example 1 before and after the catalyst life evaluation. FIGS. 11A and 11B are graphs showing the relationship between the temperature at the time of heating and the detection intensity detected by the detector, obtained from the results of this $H_2$-TPR

measurement. in which the horizontal axis is the temperature at the time of heating and the vertical axis is the detection intensity.

[Table 2]

| | | Catalyst structure before catalyst life evaluation | Catalyst structure after catalyst life evaluation |
|---|---|---|---|
| Catalyst weight | | Approximately 50mg | Approximately 50mg |
| Pretreatment condition | Pretreatment temperature | 700°C | 700°C |
| | Retention time at pretreatment temperature | 90min | 90min |
| | Gas | 5% $H_2$ + 95% Ar | 100% Ar |
| | Flow rate | 50ccm | 50ccm |
| Measurement condition | Rate of temperature rise | 10°C/min | 10°C/min |
| | Target temperature | 900°C | 900°C |
| | Retention time at target temperature | 20 min | 20 min |
| | Gas | 5% $H_2$ + 95% Ar | 5% $H_2$ + 95% Ar |
| | Flow rate | 30 ccm | 30 ccm |
| | Detector | TCD (using trap) | TCD (using trap) |

FIGS. 11A and 11B show the results of $H_2$-TPR measurement for the catalyst structures of Present Invention Example 2 and Comparative Example 1, in which FIG. 11A shows the measurement results for the catalyst structure of Present Invention Example 2 before and after catalyst life evaluation, and FIG. 11B is a diagram showing measurement results for the catalyst structure of Comparative Example 1 before and after catalyst life evaluation. In the catalyst structure of Present Invention Example 2, as shown in FIG. 11A, no clear peak change was observed before and after the catalyst life evaluation. On the other hand, in the catalyst structure of Comparative Example 1, as shown in FIG. 11B, in the sample after the catalyst life evaluation, a peak that was not observed before the catalyst life evaluation was observed near 300°C to 400°C. This peak is due to the reduction of NiO, and it is considered that nickel (Ni), which is the first catalyst particles, was oxidized after the catalyst life evaluation.

Therefore, in the catalyst structure of Present Invention Example in which it was confirmed that the first catalyst particles containing an iron-group element are carried inside the carrier, and the second catalysts containing a transition metal element with Redox capacity are carried at least either inside or on the outer surface of the carrier, it is speculated that since the second catalysts containing a transition metal element with Redox capacity are carried therein, it is possible to suppress the oxidation of the first catalyst particles and maintain excellent catalytic activity over a long period of time.

From the above results, it is speculated that the catalyst structures of Present Invention Examples 1 to 6 can maintain excellent catalytic activity over a long period of time, and can efficiently produce synthesis gas containing carbon monoxide and hydrogen.

EXPLANATION OF REFERENCE NUMERALS

1, 1A, 1B: Catalyst structure for synthesis gas production
10, 10A: Carrier
10a: Outer surface of carrier
11: Channel
11a: Pore of carrier
12: Enlarged pore portion
15a, 15b: Molecule
20: First catalyst particle
30, 30A, 30B: Second catalyst

40: Additional catalyst
$D_{C1}$: Average particle size of first catalyst particle
$D_{C2}$: Average particle size of second catalyst inside carrier
$D_F$: Average inner diameter of channels
$D_E$: Inner diameter of enlarged pore portion

**Claims**

1. A catalyst structure for synthesis gas production for use in production of a synthesis gas comprising carbon monoxide and hydrogen, the catalyst structure for synthesis gas production comprising:

   a carrier comprising a zeolite-type compound and having a porous structure;
   first catalyst particles comprising at least one iron-group element selected from the group consisting of nickel, iron, and cobalt; and
   second catalysts comprising at least one specific transition metal element selected from transition metal elements with Redox capacity,
   the carrier having, in its interior, channels communicating with one another,
   the first catalyst particles being present at least in the channels of the carrier,
   the second catalysts being present at least either inside the carrier or on an outer surface of the carrier.

2. The catalyst structure for synthesis gas production according to claim 1, wherein
   the second catalysts contain, as the specific transition metal element, at least one of zirconium, vanadium, chromium, manganese, cobalt, copper, zinc, molybdenum, and titanium.

3. The catalyst structure for synthesis gas production according to claim 1 or 2, wherein the second catalysts contain zirconium as the specific transition metal element.

4. The catalyst structure for synthesis gas production according to any one of claims 1 to 3, wherein the first catalyst particles are nickel particles.

5. The catalyst structure for synthesis gas production according to any one of claims 1 to 4, wherein the catalyst structure further comprises third catalysts containing a platinum-group element selected from the group consisting of platinum, palladium, rhodium and ruthenium.

6. The catalyst structure for synthesis gas production according to any one of claims 1 to 5, wherein a total content of the first catalyst particles contained in the catalyst structure for synthesis gas production is 0.50% by mass or more and 3.50% by mass or less in a quantitative value based on ICP emission spectroscopy (high-frequency inductively coupled plasma emission spectroscopy).

7. The catalyst structure for synthesis gas production according to any one of claims 1 to 6, wherein an average particle size of the first catalyst particles is larger than an average inner diameter of the channels.

8. The catalyst structure for synthesis gas production according to any one of claims 1 to 7, wherein an average particle size of the first catalyst particles is in a range of 1.0 nm or more and 13.0 nm or less.

9. The catalyst structure for synthesis gas production according to any one of claims 1 to 8, wherein a ratio of an average particle size of the first catalyst particles to an average inner diameter of the channels is in a range of more than 1 and 130 or less.

10. The catalyst structure for synthesis gas production according to any one of claims 1 to 9, wherein a total content of the second catalysts contained the catalyst structure for synthesis gas production is 0.85% by mass or more and less than 12.00% by mass in a quantitative value based on ICP emission spectroscopy (high-frequency inductively coupled plasma emission spectroscopy).

11. The catalyst structure for synthesis gas production according to any one of claims 1 to 10, wherein the channels have: any one selected from a one-dimensional pore, a twodimensional pore, and a three-dimensional pore of a framework structure of the zeolite-type compound; and enlarged pore portions different from all of the one-, two-,

and three-dimensional pores, and
among the first catalyst particles and the second catalysts, at least the first catalyst particles are present in the enlarged pore portions.

12. The catalyst structure for synthesis gas production according to claim 11, wherein
the enlarged pore portions connect a plurality of pores constituting one selected from the one-, two-, and three-dimensional pores.

13. The catalyst structure for synthesis gas production according to claim 11 or 12, wherein the first catalyst particles present inside the carrier have an average particle size smaller than or equal to the inner diameters of the enlarged pore portions.

14. The catalyst structure for synthesis gas production according to any one of claims 1 to 13, wherein both of the first catalyst particles and the second catalysts are fine metal particles or fine metal oxide particles.

15. The catalyst structure for synthesis gas production according to any one of claims 1 to 14, wherein the zeolite-type compound is a silicate compound.

16. The catalyst structure for synthesis gas production according to any one of claims 1 to 15, wherein the catalyst structure for synthesis gas production is capable of exhibiting a $CH_4$ conversion rate of 50% or more when loaded in an atmospheric pressure flow reactor, supplied with a raw material gas with a $CH_4/CO_2$ volume ratio of 1.0, and used to perform a dry reforming reaction at 700°C and a gas hourly space velocity (GHSV) of 2000 $h^{-1}$ for 1 hour from start of supply of the raw material gas.

17. A precursor of the catalyst structure for synthesis gas production according to any one of claims 1 to 16, wherein a precursor material of at least the first catalyst particles among the first catalyst particles and the second catalysts is fine metal oxide particles.

18. A synthesis gas production device comprising: the catalyst structure for synthesis gas production according to any one of claims 1 to 16 or the precursor of the catalyst structure for synthesis gas production according to claim 17.

19. A method of producing a catalyst structure for synthesis gas production, the method comprising:

a first firing step that comprises firing a precursor material (B) comprising an iron-group element-containing solution and a precursor material (A) for obtaining a carrier having a porous structure and comprising a zeolite-type compound, the precursor material (A) having pores with a size of 13.0 nm or less and being impregnated with the iron-group element-containing solution;
a hydrothermal treatment step that comprises hydrothermally treating a precursor material (C) obtained by firing the precursor material (B);
a step that comprises impregnating, with a specific transition metal element-containing solution, a precursor material (D) obtained by hydrothermally treating the precursor material (C); and
a second firing step that comprises firing the precursor material (D) impregnated with the specific transition metal element-containing solution,
wherein the iron-group element is at least one selected from the group consisting of nickel, iron, and cobalt, and
the specific transition metal element is selected from transition metal elements with Redox capacity.

20. A method of producing a catalyst structure for synthesis gas production, the method comprising:

a first firing step that comprises firing a precursor material (B) comprising a metal-containing solution and a precursor material (A), the metal-containing solution containing an iron-group element and a specific transition metal element, the precursor material (A) being for obtaining a carrier having a porous structure and comprising a zeolite-type compound, the precursor material (A) having pores with a size of 13.0 nm or less and being impregnated with the metal-containing solution; and
a hydrothermal treatment step that comprises hydrothermally treating a precursor material (C) obtained by firing the precursor material (B),
wherein the iron-group element is at least one selected from the group consisting of nickel, iron, and cobalt, and
the specific transition metal element is selected from transition metal elements with Redox capacity.

# FIG. 1A

# FIG. 1B

# FIG. 2A

# FIG. 2B

# FIG. 3A

# FIG. 3B

# FIG. 4

# FIG. 5

```
                                    ┌─────────────────────────┐
                                    │   PREPARATION STEP      │──S1
                                    └─────────────────────────┘
                                                │
                                                ▼
┌─────────────────────────┐         ┌─────────────────────────┐
│ IRON-group element-     │────────▶│  FIRST IMPREGNATION     │──S2
│ CONTAINING SOLUTION     │         │  STEP                   │
└─────────────────────────┘         └─────────────────────────┘
                                                │
                                                ▼
                                    ┌─────────────────────────┐
                                    │   FIRST FIRING STEP     │──S3
                                    └─────────────────────────┘
                                                │
                                                ▼
                                    ┌─────────────────────────┐
                                    │   HYDROTHERMAL          │──S4
                                    │   TREATMENT STEP        │
                                    └─────────────────────────┘
                                                │
                                                ▼
┌─────────────────────────┐         ┌─────────────────────────┐
│ SPECIFIC TRANSITION     │────────▶│  SECOND                 │──S5
│ METAL ELEMENT-          │         │  IMPREGNATION STEP      │
│ CONTAINING SOLUTION     │         └─────────────────────────┘
└─────────────────────────┘                     │
                                                ▼
                                    ┌─────────────────────────┐
                                    │  SECOND FIRING STEP     │──S6
                                    └─────────────────────────┘
                                                ┊
                                                ▼
                                    ┌─────────────────────────┐
                                    │   REDUCTION STEP        │──S7
                                    └─────────────────────────┘
```

# FIG. 6

```
                              ┌─────────────────────────┐
                              │    PREPARATION STEP      │ ～S1
                              └─────────────────────────┘
                                          │
                                          ▼
┌──────────────────────┐      ┌─────────────────────────┐
│   METAL-CONTAINING   │─────▶│  FIRST IMPREGNATION STEP │ ～S2
│      SOLUTION        │      └─────────────────────────┘
└──────────────────────┘                  │
                                          ▼
                              ┌─────────────────────────┐
                              │    FIRST FIRING STEP     │ ～S3
                              └─────────────────────────┘
                                          │
                                          ▼
                              ┌─────────────────────────┐
                              │      HYDROTHERMAL        │ ～S4
                              │    TREATMENT STEP        │
                              └─────────────────────────┘
                                          ┊
                                          ▼
                              ┌─────────────────────────┐
                              │     REDUCTION STEP       │ ～S7
                              └─────────────────────────┘
```

# FIG. 7

|  | Example 1 | Example 2 |
|---|---|---|
| AMOUNT OF Zr | 1 wt% | 5 wt% |
| MAGNIFICATION: 1,000X | | |
| MAGNIFICATION: 50,000X | | |

EP 4 316 657 A1

# FIG. 8

| | Example 3 | Example 4 | Example 5 |
|---|---|---|---|
| AMOUNT OF Zr | 9 wt% | 15 wt% | 20 wt% |
| MAGNIFICATION: 1,000X | | | |
| MAGNIFICATION: 50,000X | | | |

EP 4 316 657 A1

# FIG. 9

Graph plotting INITIAL CH$_4$ CONVERSION RATE [%] (y-axis, 0 to 100) against QUANTITATIVE VALUE [% BY MASS] OF SECOND CATALYST BY ICP/XRF (x-axis, 0 to 20). Legend: ◆ Present Invention Example.

# FIG. 10

EP 4 316 657 A1

## FIG. 11A

## FIG. 11B

**EP 4 316 657 A1**

## INTERNATIONAL SEARCH REPORT

| International application No. |
|---|
| **PCT/JP2022/016311** |

**A. CLASSIFICATION OF SUBJECT MATTER**

*B01J 29/035*(2006.01)i; *B01J 37/08*(2006.01)i; *B01J 37/10*(2006.01)i; *C01B 3/40*(2006.01)i
FI: B01J29/035 M; C01B3/40; B01J37/08; B01J37/10

According to International Patent Classification (IPC) or to both national classification and IPC

**B. FIELDS SEARCHED**

Minimum documentation searched (classification system followed by classification symbols)

B01J21/00-38/74; C01B3/32-3/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII); CAplus (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2020/116475 A1 (FURUKAWA ELECTRIC CO., LTD.) 11 June 2020 (2020-06-11)<br>claims, paragraphs [0016]-[0072], [0078]-[0079], examples, fig. 1-4 | 1-20 |
| X | WO 2020/116477 A1 (FURUKAWA ELECTRIC CO., LTD.) 11 June 2020 (2020-06-11)<br>claims, paragraphs [0018]-[0073], [0078]-[0079], examples 1-3, fig. 1-4 | 1, 2, 4-20 |
| X | LIU, Dapeng et al. MCM-41 supported nickel-based bimetallic catalysts with superior stability during carbon dioxide reforming of methane: Effect of strong metal-support interaction. Journal of catalysis. 2009, vol. 266, pp. 380-390, DOI:10.1016/j.jcat.2009.07.004<br>abstract, 2.1, 2.3, 3.1, 3.2, tables 1, 2, fig. 4, 9 | 1-4, 6, 7, 9-16, 18 |
| X | US 2018/0311651 A1 (SABIC GLOBAL TECHNOLOGIES B.V.) 01 November 2018 (2018-11-01)<br>claims 1-20, paragraphs [0011]-[0016], [0046]-[0049], [0052]-[0053], examples 3-5, fig. 1A-7 | 1, 2, 4-16, 18 |
| A | WO 2018/221697 A1 (FURUKAWA ELECTRIC CO., LTD.) 06 December 2018 (2018-12-06)<br>entire text, all drawings | 1-20 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

42

## INTERNATIONAL SEARCH REPORT
### Information on patent family members

International application No.

**PCT/JP2022/016311**

| Patent document cited in search report | | | Publication date (day/month/year) | Patent family member(s) | | | Publication date (day/month/year) |
|---|---|---|---|---|---|---|---|
| WO | 2020/116475 | A1 | 11 June 2020 | (Family: none) | | | |
| WO | 2020/116477 | A1 | 11 June 2020 | (Family: none) | | | |
| US | 2018/0311651 | A1 | 01 November 2018 | WO | 2017/072698 | A1 | |
| | | | | CN | 108136379 | A | |
| WO | 2018/221697 | A1 | 06 December 2018 | US | 2019/0039056 | A1 | |
| | | | | entire text, all drawings | | | |
| | | | | EP | 3632544 | A1 | |
| | | | | CN | 110678261 | A | |

Form PCT/ISA/210 (patent family annex) (January 2015)

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020116473 A

- JP 2020095652 A

**Non-patent literature cited in the description**

- *Toyota Central R&D Labs R&D Review,* June 1994, vol. 29 (2